# EUROPEAN PATENT APPLICATION

(11) **EP 2 028 628 A2**
(43) Date of publication of application: **25.02.2009**
(21) Application number: 08252408.3
(22) Date of filing: 15.07.2008
(51) Int. Cl.: G07F 7/10

(54) **Electronic wallet device, communication method, and program**

(30) Priority: 23.08.2007 JP 2007217480
(71) Applicant: Sony Corporation, Tokyo (JP)
(72) Inventor: Kon, Takayasu, Tokyo (JP); Kamada, Yasunori, Tokyo (JP); Sako, Yoichiro, Tokyo (JP); Abe, Miki, Tokyo (JP)
(74) Representative: Mills, Julia

(57) **Abstract**

An electronic wallet device is provided, which includes a holding section holding a plurality of non-contact type IC cards in an attachable/detachable manner, an antenna for external communication, a transmitting/receiving section demodulating a communication request received by the antenna for external communication and transmitting a response signal, a storage section storing virtual card information for the respective non-contact type IC cards held in the holding section, a card internal information recording section recording the virtual card information in the storage section based on the status of mounting of the non-contact type IC card, a card selection section selecting virtual card information to be used for communication based on the code included in the communication request and the virtual card information, and a data processing section performing processing requested by the communication request by using the virtual card information selected and making the transmitting/receiving section transmit a response signal

## Description

The present invention contains subject matter related to Japanese Patent Application JP 2007-217480 filed in the Japan Patent Office on August 23, 2007.
The present invention relates to the field of electronic wallet devices, communication methods and programs.
In recent years, non-contact type IC (Integrated Circuit) card (hereinafter called by their generally used name "smart cards") capable of communicating contactlessly with a reader/writer (or an information processor with reader/writer function) has become widespread. The reader/writer and the non-contact type IC card communicate with each other by using, for example, a magnetic field of a specific frequency such as 13.56 MHz as a carrier. Specifically, the reader/writer and the non-contact type IC card may communicate with each other by the reader/writer transmitting a carrier carrying carrier signal and the non-contact type IC card which received the carrier with an antenna sending back a response signal corresponding to the received carrier signal by load modulation. Further, by including a resonant circuit with a specific frequency (resonant frequency) such as 13.56 MHz, the non-contact type IC card demodulates the carrier signal transmitted from the reader/writer and the like with accuracy, and stabilizes the communication with the reader/writer.

Thus, for example, even with the non-contact type IC card being inside a wallet or an IC card holder, by holding the card over the reader/writer, data communication is enabled. For this reason, the non-contact type IC card is applied to IC card system offering a variety of services such as electronic money system, ticketing system of public transportation and security system into a building or a room using employee ID card, and the non-contact type IC card is becoming more widely spread.

With the IC card system spreading, it is becoming more common for users to carry a plurality of non-contact type IC cards relating to similar or dissimilar services. When carrying a plurality of non-contact type IC cards, users keep the plurality of the non-contact type IC cards in a wallet, a bag or an IC card holder, etc. If users hold the plurality of the non-contact type IC cards kept together as described above over the reader/writer simultaneously, it results in a plurality of the IC cards existing within the communication range of the reader/writer (within a range where the intensity of the magnetic field of the reader/writer is strong enough for communication). In such a case, due to various factors such as antenna coils of the plurality of the non-contact type IC cards magnetically coupled with each other, the resonant frequency of each non-contact type IC card varies, possibly disabling the communication of any of the non-contact cards.

In this circumstance, a technology is being developed for stabilizing the communication of each non-contact type IC card by arranging an interference prevention part between two non-contact type IC cards. For example, JP-A-2005-11044 a technology relating to an IC card holder with an interference prevention part arranged between two non-contact type IC cards.

However, with an IC card holder using the technology of arranging an interference prevention part between two non-contact type IC cards, at the time of using, it is necessary to hold the IC card holder over the reader/writer with the side in which a desired non-contact type IC card is held facing the reader/writer. Thus, after all, users have to select by themselves the card to be used.

To cope with the problem resulting from holding a plurality of non-contact type IC cards over the reader/writer simultaneously, detection/avoidance method (so-called anti-collision) for avoiding collision between data may have to be implemented in the IC card system. Anti-collision is a method for processing respective cards individually when a plurality of non-contact type IC cards exist within a communication range of the reader/writer, and time-slot method and slot-marker method are known, for example.

However, at present, while IC card system prepared for anti-collision exists, IC card system not prepared for anti-collision also exists. In the latter system, when a plurality of non-contact type IC cards are held over the reader/writer of a host device, the reader/writer cannot recognize each card. Accordingly, there are cases where users have to go through the trouble of pulling out a desired non-contact type IC card from the IC card holder and holding it over the reader/writer.

Also, a communication method of a proximity-type non-contact type IC card is standardized by the International Standard, ISO/IEC 14443 Standard. In this standard, a mechanism of preferentially selecting any of the card even when a plurality of non-contact type IC cards exist within the communication range of a reader/writer is provided. For example, in the Type B method standardized by ISO/IEC 14443, with request command "REQB command" transmitted by the reader/writer to detect a non-contact type IC card, identifier identifying the application (public transportation use, electronic money use, etc.) of a non-contact type IC card to be selected can be specified. In this case, with only the non-contact type IC card having the specified identifier sending back a response to the reader/writer, the target non-contact type IC card can be selected.

However, even with the card selection method set by the International Standard as described above, when carrying a plurality of non-contact type IC cards relating to similar services, it is difficult to automatically select a non-contact type IC card desired by users. Further, in actual uses, there are many cases where, for example, users do not consciously distinguish whether each non-contact type IC card is prepared or not prepared for anti-collision, and also, where users carry a plurality of non-contact type IC cards relating to similar or dissimilar services all together. Also, depending on types of non-contact type IC card, there are cards that can only be used in a specific area or a system, such as a card for public transportation. Also, there may be a case where users want to identify a card that is preferred or not among a plurality of similar cards being carried. As such, in a situation where users carry a plurality of non-contact type IC cards of various types, a mechanism has been desired which can appropriately select a card to be used for communication with the reader/writer among the plurality of the cards.

Thus, the present invention is provided in view of the above-described issues, and seeks to provide a new and improved electronic wallet device, a new and improved communication method, and a new and improved program which enable to select a desired non-contact type IC card among a plurality of non-contact type IC cards carried together, regardless of whether the non-contact type IC cards are prepared for anti-collision or not, and to make the selected non-contact type IC card and an external unit communicate with each other.

Various respective aspects and features of the invention are defined in the appended claims. Combinations of features from the dependent claims may be combined with features of the independent claims as appropriate and not merely as explicitly set out in the claims.
According to an embodiment of the present invention, there is provided an electronic wallet device including a holding section holding, in an attachable/detachable manner, a plurality of non-contact type IC cards capable of non-contact communication with an external unit, an antenna for external communication communicating contactlessly with the external unit, a transmitting/receiving section demodulating a communication request relating to a predetermined service transmitted from the external unit and received by the antenna for external communication, and transmitting a response signal to the external unit via the antenna for external communication, a storage section storing internal information of the respective non-contact type IC cards held in the holding section as virtual card information, a card internal information recording section recording in the storage section, based on the status of mounting of the non-contact type IC card in the holding section, the virtual card information corresponding to the non-contact type IC card mounted in the holding section, a card selection section selecting virtual card information to be used for communication with the external unit based on code included in the communication request and the virtual card information stored in the storage section when the communication request is received via the antenna for external communication, and a data processing section performing processing requested by the communication request by using the virtual card information selected in the card selection section, and making the transmitting/receiving section transmit a response signal corresponding to the processing result.

The electronic wallet device may include a holding section, an antenna for external communication, a transmitting/receiving section, a storage section, a card internal information recording section, a card selection section and a data processing section. The holding section may hold a plurality of non-contact type IC cards, each in an attachable/detachable manner. The antenna for external communication is, for example, a communication antenna for communicating contactlessly with an external unit. The transmitting/receiving section may demodulate a communication request relating to a predetermined service transmitted from the external unit and received by the antenna for external communication, and also, transmit a response signal to the external unit via the antenna for external communication. The storage section may store internal information of the respective non-contact type IC cards held in the holding section as virtual card information. The card internal information recording section may, for example, when a non-contact type IC card is mounted on (inserted into) the holding section, record in the storage section the virtual card information corresponding to the non-contact type IC card mounted in the holding section. The card selection section may select virtual card information to be used for communication with the external unit based on code included in the communication request and the virtual card information stored in the storage section. The data processing section may perform processing requested by the communication request by using the selected virtual card information, and make the transmitting/receiving section transmit a response signal corresponding to the processing result. With such configuration, virtual card information corresponding to the desired non-contact type IC card may be selected among the virtual card information corresponding to a plurality of non-contact type IC cards carried together, regardless of whether the non-contact type IC cards are prepared for anti-collision or not, and the non-contact type IC card corresponding to the selected virtual card information and an external unit may be made to virtually communicate with each other.

Furthermore, the electronic wallet device may further include a card recognition section detecting the non-contact type IC card mounted in the holding section, wherein the card internal information recording section records the virtual card information corresponding to the detected non-contact type IC card in the recording section each time a non-contact type IC card mounted is detected by the card recognition section.

With such configuration, the virtual card information corresponding to the respective non-contact type IC cards held in the holding section may be stored in the storage section.

Furthermore, the electronic wallet device may further include a virtual card information write back section writing back the virtual card information stored in the storage section into the non-contact type IC card corresponding to the virtual card information.

With such configuration, the non-contact type IC card corresponding to the selected virtual card information and an external unit may virtually communicate with each other.

The virtual card information write back section may delete the virtual card information corresponding to the non-contact type IC card stored in the storage section when the writing back of the virtual card information into the non-contact type IC card is completed.

With such configuration, data are prevented from existing redundantly in both the non-contact type IC card and the electronic wallet device after ejection of the non-contact type IC card, for example.

The holding section may make possible ejection of the non-contact type IC card into which the virtual card information is written back, when the writing back of the virtual card information into the non-contact type IC card is completed in the virtual card information write back section.

With such configuration, data can be prevented from existing redundantly in both the non-contact type IC card and the electronic wallet device after ejection of a non-contact type IC card.

According to another embodiment of the present invention, there is provided an electronic wallet device including a holding section holding, in an attachable/detachable manner, a plurality of non-contact type IC cards capable of non-contact communication with an external unit, an antenna for external communication communicating contactlessly with the external unit, an antenna for card communication communicating contactlessly with the plurality of the non-contact type IC cards held in the holding section, a storage section capable of storing code relating to service the respective non-contact type IC cards held in the holding section relate to, a card internal information recording section recording, in accordance with the attaching/detaching of the non-contact type IC cards to the holding section, the code of the respective non-contact type IC cards held in the holding section, a card selection section selecting a non-contact type IC card to be used for communication with the external unit based on the code included in the communication request and the code stored in the storage section when a communication request relating to a predetermined service transmitted from the external unit is received via the antenna for external communication, and a communication control section connecting the non-contact type IC card selected by the card selection section and the external unit in a communicable manner via the antenna for external communication and the antenna for card communication.

The electronic wallet device may include a holding section, an antenna for external communication, an antenna for card communication, a storage section, a card internal information recording section, a card selection section, and a communication control section. The holding section may hold a plurality of non-contact type IC cards, each in an attachable/detachable manner. The antenna for external communication is, for example, a communication antenna for communicating contactlessly with an external unit. The antenna for card communication is, for example, an internal communication antenna for communicating contactlessly with a plurality of non-contact type IC cards held in the holding section. The storage section may store code relating to service the respective non-contact type IC cards held in the holding section relate to. The card internal information recording section may record, in accordance with the attaching/detaching of the non-contact type IC cards to the holding section, for example, the code of the respective non-contact type IC cards held in the holding section. The card selection section may select a non-contact type IC card to be used for communication with the external unit based on the code included in the communication request and the code stored in the storage section. The communication control section may connect the selected non-contact type IC card and the external unit in a communicable manner via the antenna for external communication and the antenna for card communication. With such configuration, a desired non-contact type IC card may be selected among a plurality of non-contact type IC cards carried together, regardless of whether the non-contact type IC cards are prepared for anti-collision or not, and it may be made to communicate with an external unit.

Furthermore, the electronic wallet device may further include a card recognition section detecting the attaching/detaching of the non-contact type IC card to the holding section, wherein the card internal information recording section updates the code of the non-contact type IC cards stored in the storage section to the code of the respective non-contact type IC cards held in the holding section each time the attaching/detaching of the non-contact type IC card is detected by the card recognition section.

With such configuration, a desired non-contact type IC card may be selected among a plurality of non-contact type IC cards carried together.

According to another embodiment of the present invention, there is provided a communication method for an electronic wallet device including a holding section capable of holding a plurality of non-contact type IC cards capable of non-contact communication with an external unit, an antenna for external communication communicating contactlessly with the external unit, and a storage section, including detecting step of detecting the non-contact type IC card mounted in the holding section, recording step of recording in the storage section, when the non-contact type IC card mounted is detected in the detecting step, internal information of the detected non-contact type IC card as virtual card information, selecting step of selecting the virtual card information corresponding to communication request from the virtual card information stored in the storage section when a communication request relating to a predetermined service is received from the external unit via the antenna for external communication, processing step of processing the communication request by using the virtual card information selected in the selecting step, and transmitting a response signal corresponding to the processing result by the processing step via the antenna for external communication.

By using such method, virtual card information corresponding to the desired non-contact type IC card may be selected among the virtual card information corresponding to a plurality of non-contact type IC cards carried together, regardless of whether the non-contact type IC cards are prepared for anti-collision or not, and the non-contact type IC card corresponding to the selected virtual card information and an external unit may be made to virtually communicate with each other.

According to another embodiment of the present invention, there is provided a communication method for an electronic wallet device including a holding section capable of holding a plurality of non-contact type IC cards capable of non-contact communication with an external unit, an antenna for external communication communicating contactlessly with the external unit, and a storage section, including detecting step of detecting the attaching/detaching of the non-contact type IC card to the holding section, recording step of recording in the storage section, when the attaching/detaching of the non-contact type IC card is detected by the detecting step, code relating to service the respective non-contact type IC cards held in the holding section relate to, selecting step of selecting a non-contact type IC card corresponding to a communication request among the non-contact type IC cards held in the holding section based on the code recorded in the storage section when the communication request relating to a predetermined service is received from the external unit via the antenna for external communication, and connecting step of connecting the non-contact type IC card selected in the selecting step and the external unit in a communicable manner.

By using such method, a desired non-contact type IC card may be selected among a plurality of non-contact type IC cards carried together, regardless of whether the non-contact type IC cards are prepared for anti-collision or not, and it may be made to communicate with an external unit.

According to another embodiment of the present invention, there is provided a program that can be used in an electronic wallet device including a holding section capable of holding a plurality of non-contact type IC cards capable of non-contact communication with an external unit, an antenna for external communication communicating contactlessly with the external unit, and a storage section, wherein the program makes a computer execute detecting step of detecting the non-contact type IC card mounted in the holding section, recording step of recording in the storage section, when the the non-contact type IC card mounted is detected in the detecting step, internal information of the detected non-contact type IC card as virtual card information, selecting step of selecting the virtual card information corresponding to a communication request from the virtual card information stored in the storage section when the communication request relating to a predetermined service is received from the external unit via the antenna for external communication, processing step of processing the communication request by using the virtual card information selected in the selecting step, and transmitting step of transmitting a response signal corresponding to the processing result by the processing step via the antenna for external communication.

With such program, virtual card information corresponding to the desired non-contact type IC card may be selected among the virtual card information corresponding to a plurality of non-contact type IC cards carried together, regardless of whether the non-contact type IC cards are prepared for anti-collision or not, and the non-contact type IC card corresponding to the selected virtual card information and an external unit may be made to virtually communicate with each other.

According to another embodiment of the present invention, there is provided a program that can be used in an electronic wallet device including a holding section capable of holding a plurality of non-contact type IC cards capable of non-contact communication with an external unit, an antenna for external communication communicating contactlessly with the external unit, and a storage section, wherein the program makes a computer execute detecting step of detecting the attaching/detaching of the non-contact type IC card to the holding section, recording step of recording in the storage section, when the attaching/detaching of the non-contact type IC card is detected by the detecting step, code relating to service the respective non-contact type IC cards held in the holding section relate to, selecting a non-contact type IC card corresponding to a communication request among the non-contact type IC cards held in the holding section based on the code recorded in the storage section when the communication request relating to a predetermined service is received from the external unit via the antenna for external communication, and connecting step of connecting the non-contact type IC card selected in the selecting step and the external unit in a communicable manner.

With such program, a desired non-contact type IC card may be selected among a plurality of non-contact type IC cards carried together, regardless of whether the non-contact type IC cards are prepared for anti-collision or not, and it may be made to communicate with an external unit.

According to the embodiments of the present invention described above, a desired non-contact type IC card may be selected among a plurality of non-contact type IC cards carried together, regardless of whether the non-contact type IC cards are prepared for anti-collision or not, and the selected non-contact type IC card and an external unit may be made to communicate with each other.

Embodiments of the invention will now be described with reference to the accompanying drawings, throughout which like parts are referred to by like references, and in which:
FIG. 1 is an explanatory diagram showing an example of the appearance of an electronic wallet device according to the first embodiment of the present invention.
FIG. 2A is an explanatory diagram showing an example of a way of using the electronic wallet device according to the first embodiment of the present invention.
FIG. 2B is an explanatory diagram showing an example of a way of using the electronic wallet device according to the first embodiment of the present invention.
FIG. 2C is an explanatory diagram showing an example of a way of using the electronic wallet device according to the first embodiment of the present invention.
FIG. 3 is a block diagram showing a configuration example of an IC card system according to the first embodiment of the present invention.
FIG. 4 is a block diagram showing a schematic configuration example of the electronic wallet device according to the first embodiment of the present invention.
FIG. 5A is an explanatory diagram showing a configuration example of a holding section according to the first embodiment of the present invention.
FIG. 5B is an explanatory diagram showing a configuration example of the holding section according to the first embodiment of the present invention.
FIG. 5C is an explanatory diagram showing a configuration example of the holding section according to the first embodiment of the present invention.
FIG. 6 is a block diagram showing a configuration example of the electronic wallet device according to the first embodiment of the present invention.
FIG. 7 is a flow chart showing an example of a method for recording/updating card information according to the first embodiment of the present invention.
FIG. 8 is a flow chart showing an example of a communication method of the electronic wallet device according to the first embodiment of the present invention.
FIG. 9 is a sequence diagram showing an example of a communication method of the electronic wallet device according to the first embodiment of the present invention.
FIG. 10 is a sequence diagram showing another example of a communication method of the electronic wallet device according to the first embodiment of the present invention.
FIG. 11 is a block diagram showing a schematic configuration example of an electronic wallet device according to the second embodiment of the present invention.
FIG. 12 is a block diagram showing a configuration example of the electronic wallet device according to the second embodiment of the present invention.
FIG. 13 is a flow chart showing an example of a method for recording virtual card information according to the second embodiment of the present invention.
FIG. 14 is a flow chart showing an example of a method for writing back virtual card information according to the second embodiment of the present invention.
FIG. 15 is a sequence diagram showing an example of a communication method of the electronic wallet device according to the second embodiment of the present invention.

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

### (First Embodiment)

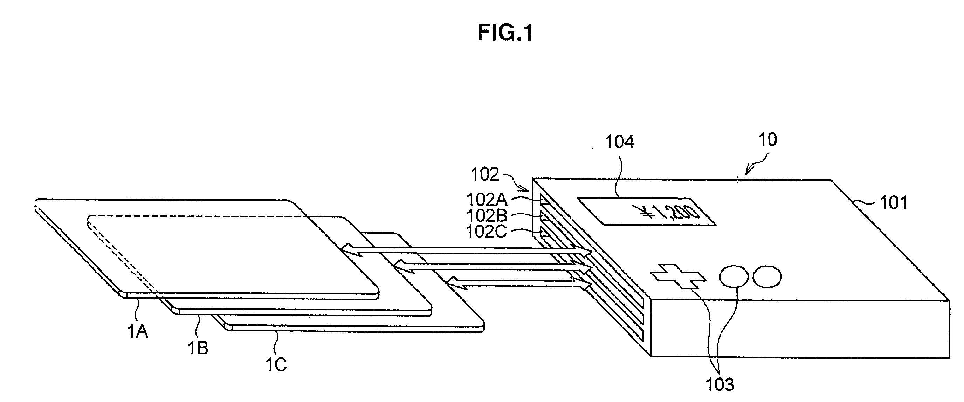

First, the appearance of an electronic wallet device according to the first embodiment of the present invention will be described. FIG. 1 is an explanatory diagram showing an example of the appearance of the electronic wallet device 10 according to the first embodiment of the present invention.

As shown in FIG. 1, the electronic wallet device 10 may be portable size that a user can carry in pocket of clothing, bag, and the like, for example. The electronic wallet device 10 functions as a holding case capable of holding a plurality of non-contact type IC cards 1A, 1B and 1C (hereinafter, referred to as "non-contact type IC card(s)" 1 generically). By having a plurality of the non-contact type IC cards 1 in the electronic wallet device 10, a user can carry the plurality of the non-contact type IC cards 1 all together.

The electronic wallet device 10 may include, for example, a housing 101 in a substantially rectangular parallelepiped shape, a holding section 102 capable of holding a plurality of non-contact type IC cards 1, an operation section 103 as a user input interface, and a display section 104 that displays various information relating to the service using the non-contact type IC card 1.

The holding section 102 may be configured from a plurality of slots 102A, 102B and 102C arranged parallel to each other on one side of the housing 101, for example. By inserting/removing (attaching/detaching) the non-contact type IC cards 1A to 1C into/from the slots 102A to 102C, the non-contact type IC cards 1 may be housed in the electronic wallet device 10 in an attachable/detachable manner.

Incidentally, although the electronic wallet device 10 as shown in FIG. 1 includes three slots 102A to 102C to be able to hold three non-contact type IC cards 1A to 1C, the electronic wallet device according to the embodiment of the present invention is not limited to such. For example, the electronic wallet device according to the embodiment of the present invention may hold two or more than three non-contact type IC cards. Also, in the electronic wallet device 10 as shown in FIG. 1, the three slots 102A to 102C are of the same shape, but they are not limited to such. For example, the electronic wallet device according to the embodiment of the present invention may be provided with slots of different shapes to handle non-contact type IC cards of various shapes and sizes. Further, in the electronic wallet device 10 as shown in FIG. 1, a case is shown where one non-contact type IC card is-inserted into one slot. However, it is not limited to such configuration, and a plurality of non-contact type IC cards may be inserted into one slot, for example.

### (Non-Contact Type IC Card)

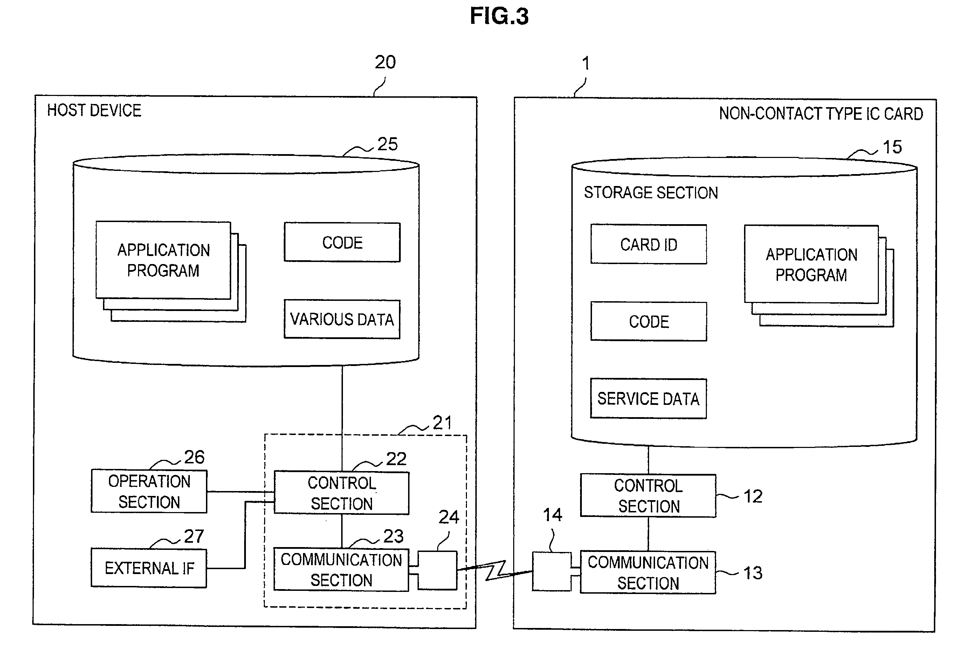

Hereinafter, the non-contact type IC card 1 according to the embodiment of the present invention will be described in detail. The non-contact type IC card 1 includes within a thin card exterior, for example, an antenna for communicating contactlessly with a reader/writer (data reading/writing device) of a host device, and an IC chip having an IC capable of executing a predetermined calculation (refer to FIG. 3). The IC chip may be tamper resistant. For example, writing, updating and the like may be performed safely on data such as electronic money whose tampering may become a problem. Incidentally, the non-contact type IC card according to the embodiment of the present invention is not limited to be configured to include the antenna and the IC chip separately. For example, the antenna may be housed in the IC chip, or it is possible to include the antenna and the IC chip in one package.

The antenna included in the non-contact type IC card 1 may be configured with a resonant circuit having a coil with predetermined inductance and a capacitor having predetermined capacitance. By demodulating AC component of the induced voltage, which is generated by the electromagnetic induction when magnetic field of a predetermined frequency (hereinafter, referred to as "carrier") transmitted from the reader/writer passes through the antenna, the non-contact type IC card may retrieve the data transmitted from the reader/writer, and also, the non-contact type IC card 1 may be driven by the power obtained from the DC component of the induced voltage.

Also, the non-contact type IC card 1 may send a response by generating a demagnetizing field to the carrier from the antenna by load modulation. The reader/writer may detect changes in the impedance of the non-contact type IC card 1 generated by the load modulation, as a response signal from the non-contact type IC card 1.

As described above, the reader/writer and the non-contact type IC card 1 may communicate contactlessly with each other by using a carrier. Thus, for example, when a user holds the non-contact type IC card over the reader/writer, communication is performed between the reader/writer and the non-contact type IC card 1 (for example, reading and writing of data may be performed). The non-contact type IC card 1 has the advantages that it is easy to use, since it is not needed to be inserted into or removed from the reader/writer, that data can be transmitted and received rapidly, that the security is high because it is hard to alter or falsify, and that the card itself may be used repeatedly by overwriting the data.

Accordingly, provision of services using the non-contact type IC card 1 is becoming widespread, and IC card system providing a variety of services is being used. As IC card system using the non-contact type IC card 1, there are, for example, an electronic money system, a ticketing system of public transportation, an expressway toll collection system, an electronic settlement system, a security system for entry into a building or a room and for logging in a personal computer. Accordingly, as use of the non-contact type IC card 1, there are the following (1) to (6), for example.

(1) An electronic money card storing electronic value (data equivalent to money) of electronic money, point, coupon, and the like.
(2) A public transportation card storing data of a commuter pass or a reserved-seat ticket for train, bus, expressway, and the like, or data of the prepaid fare.
(3) A person authentication card used as an ID card, such as an employee ID card and a student ID card used for identifying a person, managing the signing in and out, and as a key for entering and leaving a building.
(4) A membership card, a reward card, a coupon card for a variety of shops and facilities.
(5) An electronic ticket card storing the electronic ticket data of theater, concert hall, sports stadium, amusement facilities and the like.
(6) An electronic settlement card used for electronic commerce such as internet shopping, delivery of video/music contents, trading of financial instruments such as marketable securities and deposit.

Further, the non-contact type IC card 1 is becoming more and more diversified as a multi-application card having multiple functions as described above in one non-contact type IC card 1 is being developed.

The electronic wallet device 10 according to the first embodiment is, for example, configured to hold a plurality of the variety of non-contact type IC cards 1, as shown in FIG. 1. This allows a user to carry a plurality of non-contact type IC cards 1 together by having them held in the electronic wallet device 10. Further, when communicating with the reader/writer, the electronic wallet device 10 may automatically select an appropriate card to be used among the plurality of the non-contact type IC cards 1 for the communication with the reader/writer (or the communication with the host device via the reader/writer) by applying a variety of standards for card selection (described later).

### (Example of Usage of Electronic Wallet Device 10)

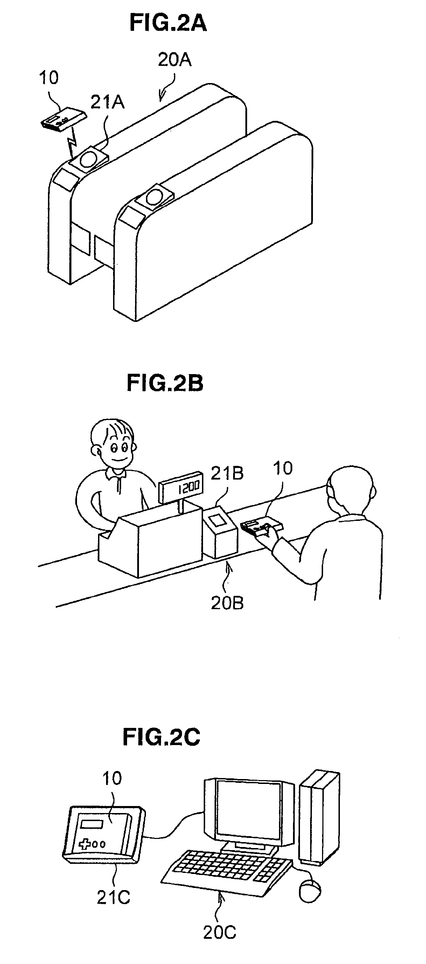

FIGS. 2A to 2C are explanatory diagrams showing examples of the types of usage for the electronic wallet device 10 according to the first embodiment of the present invention. For example, as shown in FIGS. 2A to 2C, with a user simply holding the electronic wallet device 10 holding a plurality of the non-contact type IC cards 1 over a reader/writer 21 of a host device 20, the electronic wallet device 10 automatically selects an appropriate non-contact type IC card 1, and the communication with the reader/writer 21 may be performed. Thus, the user can enjoy a desired service using the non-contact type IC card 1 without having to pull out the non-contact type IC card 1 needed from the electronic wallet device 10.

### (1) Ticket Gate of Public Transportation

For example, as shown in FIG. 2A, at a ticket gate of public transportation, a user holds the electronic wallet device 10 holding a plurality of the non-contact type IC cards 1 over a reader/writer 21A of an automatic ticket gate (a host device) 20A of public transportation. Then, an appropriate transportation card is selected among the plurality of the non-contact type IC cards 1 in the electronic wallet device 10, and information relating to payment of the transportation fee for the public transportation is transmitted and received between the selected transportation card and the reader/writer 21 A.

### (2) Purchasing

Further, as shown in FIG. 2B, in a convenience stores and departments stores, a user holds the electronic wallet device 10 over a reader/writer 21B of a cash register (a host device) 20B. Then, an appropriate electronic money card is selected among the plurality of the non-contact type IC cards 1 in the electronic wallet device 10, and information relating to payment for the purchase is transmitted and received between the selected electronic money card and the reader/writer 21 B.

### (3) Electronic Commerce

Further, as shown in FIG. 2C, in an electronic commerce using a user terminal (a host device; a personal computer, for example) 20C connected to the Internet and the like, a user holds the electronic wallet device 10 over a reader/writer 21C of the user terminal 20C. Then, an appropriate electronic settlement card is selected among the plurality of the non-contact type IC cards 1 in the electronic wallet device 10, and information relating to the electronic commerce is transmitted and received between the selected electronic settlement card and the reader/writer 21C.

As described above, by locating (holding over) the electronic wallet device 10 according to the first embodiment within the communication range of the reader/writer 21 of the host device 20, the electronic wallet device 10 automatically selects the non-contact type IC card 1 corresponding to the service provided by the host device 20, and information relating to a desired service is transmitted and received between the selected non-contact type IC card 1 and the host device 20. Incidentally, in FIGS. 2A to 2C, as a way of using the electronic wallet device 10, an example is shown where the electronic wallet device 10 communicates with a host device such as the automatic ticket gate 20A, the cash register 20B and the user terminal 20C via the reader/writer. However, the way of using the electronic wallet device according to the embodiment of the present invention is not limited as such. For example, the electronic wallet device 10 may communicate with any arbitrary host device capable of communicating contactlessly with the non-contact type IC card, such as vending machines for a variety of goods or tickets, a POS (Point of Sale) terminal, a Kiosk terminal, an ATM (Automatic Teller Machine) of a bank, and the like.

### (Configuration Example of IC Card System)

Hereinafter, the configuration of an IC card system using the electronic wallet device 10 as described above will be described in detail.

The communication in the IC card system according to the embodiment of the present invention may be "symmetrical communication", which does not use subcarrier and which is performed at a communication speed of 212 kbps using frequency band of 13.56 MHz, for example. Further, the IC card system according to the embodiment of the present invention realizes radio communication by modulating a carrier, for example. Here, the modulation method may be ASK (Amplitude Shift Keying) modulation, and Manchester coding method may be used as the coding method, but they are not limited to such. Further, the IC card system according to the embodiment of the present invention may use the time slot method as the detection/avoidance (anti-collision) method for avoiding data collision, for example. However, the IC card system according to the embodiment of the present invention does not necessarily have to be prepared for anti-collision. The IC card system according to the embodiment of the present invention may repeat transaction and may perform communication relating to a predetermined service by, for example, the reader/writer 21 of the host device 20 issuing various commands to the non-contact type IC cards 1, and the non-contact type IC card 1 responding to the commands.

FIG. 3 is a block diagram showing a configuration example of the IC card system according to the first embodiment of the present invention.

### (Configuration Example of Host Device 20)

Referring to FIG. 3, the host device 20 may include a control section 22, a communication section 23, an antenna 24, a storage section 25, an operation section 26, and an external interface 27. Here, in the host device 20 as shown in FIG. 3, the reader/writer 21 may be configured with the control section 22, the communication section 23, and the antenna 24, for example. Further, the host device 20 may include a ROM (Read Only Memory; not shown) in which programs to be used by the control section 22 and data for control such as operation parameters are recorded, a RAM (Random Access Memory; not shown) temporarily storing programs to be executed by the control section 22, and the like, and a display section (not.shown). In the host device 20, each component may be connected by a bus as the transmission channel for data, for example. Here, the display section (not shown) may be an LCD (Liquid Crystal Display), an organic EL display (organic ElectroLuminescence display, also called an OLED display (Organic Light Emitting Diode display)), or the like, but it is not limited to such.

Incidentally, in FIG. 3, a configuration is shown in which the host device 20 includes the reader/writer 21. However, the configuration is not limited to such, and the host device and the reader/writer may be separate bodies, for example. Here, in case the host device and the reader/writer are separate bodies, the reader/writer may include a control section controlling the entire reader/writer, programs providing a predetermined service, a storage section in which data for control such as operation parameters are recorded, and the like.

The control section 22 is configured with an MPU (Micro Processing Unit), for example, and may control the entire host device 20. Further, the control section 22 may, for example, operate according to the programs stored in the storage section 25, and may execute calculation relating to a predetermined service, command generation, control of transmission and reception of various information. Thereby, the reader/writer can execute card detection (polling) on the non-contact type IC cards 1, mutual authentication, reading and writing of data, and the like.

The communication section 23 executes, based on the instructions from the control section 22, non-contact communication with the non-contact type IC card 1 by using the antenna 24. The communication section 23 is configured with, for example, a modulation circuit (not shown) performing ASK modulation, and an amplifier circuit (not shown) amplifying the output of the modulation circuit, and may transmit a carrier from the antenna 24. The communication section 23 performs modulation in accordance with command and data relating to the predetermined service with the configuration as described above, for example, and transmits the command and data to the non-contact type IC card 1.

Further, the communication section 23 demodulates a response signal from the non-contact type IC card 1 by envelope-detecting the amplitude change of the voltage at the end of the antenna 24, for example. Then, the communication section 23 may output the command and data transmitted from the non-contact type IC card 1, obtained by demodulation, to the control section 22. Incidentally, the means of the communication section 23 for demodulating response signal is not limited to the above, and the response signal may be demodulated by using the phase change of the voltage at the end of the antenna 24, for example.

The antenna 24 is a communication antenna for communicating with the non-contact type IC card 1. The antenna 24 may be configured with a resonant circuit with a predetermined frequency (for example, 13.56 MHz) having a coil with predetermined inductance and a capacitor having predetermined capacitance, for example.

The storage section 25 is a storage means included in the host device 20, and may store various information. Here, the information to be stored in the storage section 25 may be, for example, programs for making the control section 22 operate to provide a predetermined service (application program), code indicating a service which the reader/writer 21 deals with (for example, service code and system code), data obtained from the non-contact type IC card 1, data processed by the control section 22, input data from the operation section 26 and the external interface 27, but they are not limited to such. Further, the storage section 25 may be, for example, a magnetic recording medium such as a Hard Disk, or a non-volatile memory such an EEPROM (Electrically Erasable and Programmable Read Only Memory), a flash memory, a MRAM (Magnetoresistive Random Access Memory), a FeRAM (Ferroelectric Random Access Memory), or a PRAM (Phase change Random Access Memory), but it is not limited to such.

The operation section 26 is an operation means of the host device 20 enabling a predetermined operation by a user. For example, it can make the host device 20 operate as desired by the user, such as activation of a specific application program stored in the storage section 25. Here, the operation section 26 may be an operation input device such as a key board and a mouse, buttons, direction keys, or a combination thereof, but it is not limited to such. Incidentally, the operation section 26 may be integrated into a display section (not shown) like a touch screen, for example.

The external interface 27 (external IF 27) is an interface for transmitting and receiving information by connecting with the external unit (not shown). Here, the host device 20 and the external unit (not shown) may be connected with each other physically via an USB (Universal Serial Bus) terminal or a terminal of IEEE 1394 Standard, for example, or they may be connected with each other wirelessly by using a WUSB (Wireless Universal Serial Bus), an IEEE 802.11, or the like. Further, the external unit (not shown) and the host device 20 may be connected with each other via a network, for example. Here, the network may be a wired network such as a LAN (Local Area Network) or a WAN (Wide Area Network), a wireless network such as a WLAN (Wireless Local Area Network) using MIMO (Multiple-Input Multiple-Output), or an Internet using communication protocol such as TCP/IP (Transmission Control Protocol/Internet Protocol), or the like, but it is not limited to such. Accordingly, the external interface 27 may be an interface adapted to the format of with the external unit (not shown).

### (Configuration Example of Non-Contact Type IC Card 1)

Next, a configuration example of the non-contact type IC card 1 will be described. The non-contact type IC card 1 may include a control section 12, a communication section 13, an antenna 14, and a storage section 15. Here, the control section 12, the communication section 13 and the storage section 15 may be built in an IC chip, for example. However, the non-contact type IC card according to the embodiment of the present invention is not limited to be of such configuration. For example, in the non-contact type IC card according to the embodiment of the present invention, the control section, the communication section, the antenna, and the storage section may be embodied in IC chips.

The control section 12 is configured with an MPU (Micro Processing Unit), for example, and may control the entire non-contact type IC card 1. Further, the control section 12 may, for example, execute programs such as application program stored in the storage section 15, and may perform a predetermined calculation based on the execution of the program, command generation, control of transmission and reception of various information. Further, the control section 12 performs process relating to data relating to services (hereinafter, referred to as "service data") in response to various requests (for example, requests for reading-out and writing-in of data) transmitted from the reader/writer 21. Here, the processes relating to the service data may include reading out the service data from the storage section 15, writing the service data transmitted from the reader/writer 21 in the storage section 15, and the like, but they are not limited to such.

By demodulating AC component of the induced voltage, which is generated when a carrier transmitted from the reader/writer 21 passes through the antenna 14, the communication section 13 may retrieve the data transmitted from the reader/writer, and also, the communication section 13 may obtain power from the DC component of the induced voltage.

Further, the communication section 13 may, for example, perform load modulation in accordance with an instruction from the control section 12 (for example, instructions based on the results of various processings performed by the control section 12), and may perform communication such as responding to the reader/writer 21 via the antenna 14.

The communication section 13 may include, for example, a detector circuit, a clock extraction circuit, a demodulation circuit, a regulator, a load modulation circuit, and the like. The detector circuit rectifies the induced voltage, and the clock extraction circuit extracts clock from the induced voltage. Further, the demodulation circuit demodulates based on the induced voltage and retrieves command and service data transmitted from the reader/writer 21, and the regulator rectifies and stabilizes the induced voltage. The load modulation circuit is configured with a resistor having a predetermined resistance value and a transistor, and by performing switching based on instructions from the control section 12, changes the impedance of the non-contact type IC card 1 to the reader/writer 21.

The storage section 15 is a storage means included in the non-contact type IC card 1, and may store various information. Here, the information to be stored in the storage section 15 may be, for example, application programs to be executed by the control section 12, card ID for uniquely identifying the non-contact type IC card 1, code indicating a service the non-contact type IC card 1 relates to (service code, system code, and the like), and service data including data obtained from the reader/writer 21 or data processed by the control section 12. However, it is not limited to such. Further, the storage section 15 may be a non-volatile memory such as an EEPROM or a flash memory, for example, but it is not limited to such.

Incidentally, in a case where the non-contact type IC card 1 is a multi-application card that relates to a plurality of services, multiple kinds of codes corresponding to each of the services, application programs and service data, for example, are stored in the storage section 15.

With the configuration as shown in FIG. 3, by the reader/writer 21 of the host device 20 and the non-contact type IC card 1 communicating contactlessly with each other, the IC card system may provide a variety of services using non-contact type IC card 1 to users. Incidentally, as shown in FIG. 3, the non-contact type IC card 1 may directly communicate contactlessly with the reader/writer 21. However, it is not limited to such configuration, and the non-contact type IC card 1 may be held in the electronic wallet device 10, and communicate indirectly with the reader/writer 21 via the electronic wallet device 10. That is, the electronic wallet device 10 may have the function of acting as an intermediary for the communication between a plurality of the non-contact type IC cards 1 and the reader/writer 21.

### (Configuration Example of Electronic Wallet Device 10 according to First Embodiment: Outline)

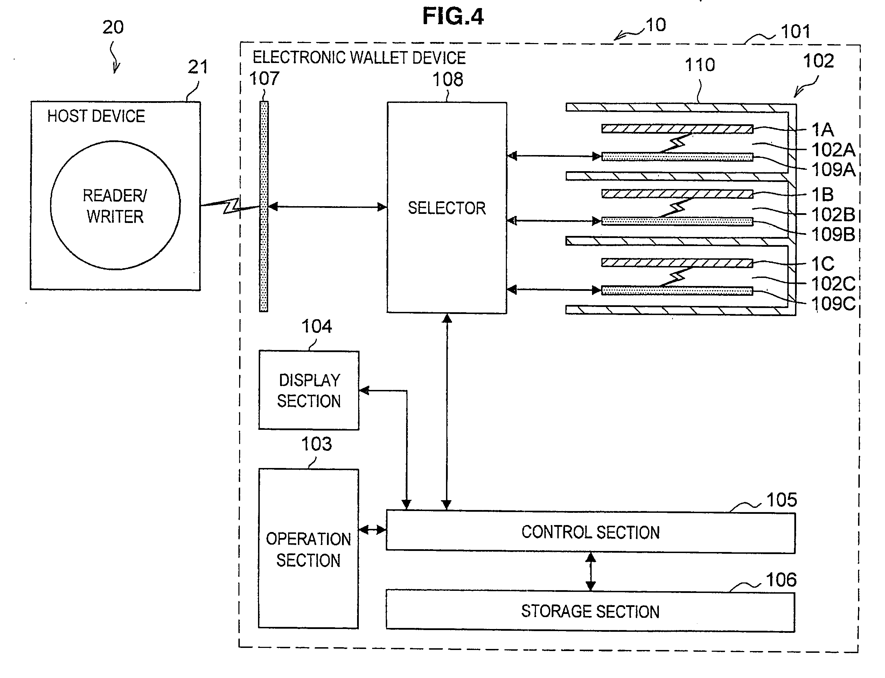

Next, the configuration of the electronic wallet device 10 according to the first embodiment of the present invention will be described. FIG. 4 is a block diagram showing a schematic configuration example of the electronic wallet device 10 according to the first embodiment of the present invention.

Referring to FIG. 4, the electronic wallet device 10 may include a housing 101, a holding section 102, a display section 103, an operation section 104, a control section 105, a storage section 106, an antenna for external communication 107, a selector 108, antennas for card communication 109A to 109C, and a shield 110. Further, the electronic wallet device 10 may include an internal power supply (not shown) such as a battery, capable of supplying power to each section such as the display section 103, the operation section 104, the control section 105, and the storage section 106.

A holding section 102 for holding a plurality of non-contact type IC cards 1 is provided inside the housing 101 of the electronic wallet device 10. The holding section 102 includes, for example, a plurality of slots 102A to 102C as shown in FIG. 1, and may stably hold the plurality (for example, three in FIG. 4) of the non-contact type IC cards 1A to 1C inserted from card insertion opening formed in the housing 101. As shown in FIG. 4, the holding section 102 is partitioned into holding areas (that is, the slots 102A to 102C) for each of the non-contact type IC cards 1. In each of the holding areas, the antennas for card communication 109A to 109C (hereinafter, referred to as "antenna(s) for card communication 109" generically) are arranged, respectively.

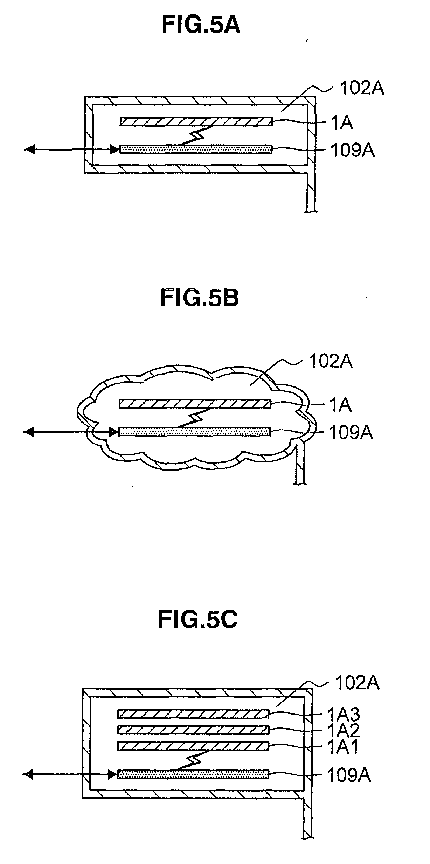

FIGS. 5A to 5C are explanatory diagrams showing configuration examples of the holding section 102 according to the first embodiment of the present invention. FIGS. 5A to 5C shows a part of the holding section 102 (a part corresponding to the slot 102A).

### (A) First Configuration Example

FIG. 5A is an explanatory diagram showing the first configuration example of the holding section 102. As shown in FIG. 5A, the holding section 102 is formed in a rectangular shape, for example, and may hold one non-contact type IC card 1.

### (B) Second Configuration Example

FIG. 5B is an explanatory diagram showing the second configuration example of the holding section 102. As shown in FIG. 5B, the holding section 102 is not limited to be rectangular as shown in FIG. 5A, and may take an arbitrary shape capable of holding the non-contact type IC card 1. By not limiting the shape of the holding section 102 to be rectangular, it is possible to, for example, set the shape of the holding section 102 in accordance with the shape of the housing 101 of the electronic wallet device 10. Accordingly, the electronic wallet device 10 may be of various shapes, for example.

### (C) Third Configuration Example

FIG. 5C is an explanatory diagram showing the third configuration example of the holding section 102. As shown in FIG. 5C, the holding section 102 may hold a plurality (in FIG. 5C, three; 1A1 to 1A3) of the non-contact type IC cards 1. Here, to hold the plurality of the non-contact type IC cards 1 stably, the holding section 102 according to the third configuration example may include spacers (not shown) for holding the plurality of the non-contact type IC cards 1 at a predetermined interval, for example.

By having the configurations as indicated by the above (A) to (C), for example, the holding section 102 may stably hold one or a plurality of the non-contact type IC cards 1. Incidentally, it is needless to say that the configuration of the holding section 102 according to the embodiment of the present invention is not limited to the configurations as indicated by the above (A) to (C).

Referring again to FIG. 4, each component of the electronic wallet device 10 will be described. The antenna for card communication 109 is a communication antenna for communicating contactlessly with each of the non-contact type IC cards 1 held in the holding section 102. The antenna for card communication 109 may be configured with a resonant circuit having a coil with predetermined inductance and a capacitor having predetermined capacitance, for example. The antennas for card communication 109 are, for example, provided for each of the slots 102A to 102C of the holding section 102, and are arranged facing each of the non-contact type IC cards 1. Accordingly, each of the antennas for card communication 109 may individually communicate contactlessly with each of the non-contact type IC cards 1 held in the holding section 102. Further, the antennas for card communication 109 are connected with the antenna for external communication 107 and the control section 105 via the selector 108, and may exchange, with the reader/writer 21 or the control section 105, service data written in or read out from the storage section 15 of the non-contact type IC card 1.

Further, the shield 110 may be provided in the holding section 102 to divide the plurality of the non-contact type IC cards 1 held from each other. The shield 110 is made of material that blocks electromagnetic wave, and is shaped to individually enclose each of the non-contact type IC cards 1 held in the holding section 102, for example. With the shield 110, the plurality of the non-contact type IC cards 1 held in the holding section 102 may be separated electromagnetically so that they may not interfere with each other. Accordingly, antenna coils of the plurality of the non-contact type IC cards 1 adjacent to each other are prevented from magnetically coupling with each other, and the influence by the electromagnetic induction and the like of the other non-contact type IC cards 1 may be eliminated or at least reduced. Thus, a non-contact type IC card 1 selected among the plurality of the non-contact type IC cards 1 held in the holding section 102 may suitably communicate with the reader/writer 21 without being interfered by the other non-contact type IC cards 1.

As described above, in the holding section 102, the plurality of the antennas for card communication 109 are installed that are assigned for each of the plurality of the non-contact type IC cards 1, and the shield 110 is provided that electromagnetically separates the plurality of the non-contact type IC cards 1. With this, even when the plurality of the non-contact type IC cards 1 not prepared for anti-collision are held in the holding section 102, each of the non-contact type IC cards 1 may be able to perform communication individually. Incidentally, the electronic wallet device 10 according to the first embodiment of the present invention is not limited to such configuration. For example, when holding only the non-contact type IC cards 1 prepared for anti-collision, it is possible to provide only one antenna for card communication 109 shared by all of the non-contact type IC cards 1, and not provide the shield 110.

The operation section 103 is an operation means of the electronic wallet device 10 enabling a predetermined operation by a user, and is configured with buttons, lever and the like, for example. The user may set the content of operation of the electronic wallet device 10 or input data, for example, by operating on the operation section 103.

The display section 104 is a display means included in the electronic wallet device 10, and, for example, may display various information relating to the service using the non-contact type IC card 1. For example, the display section 104 may display the type of the non-contact type IC card 1 held in the holding section 102 or card internal information such as service data (for example, balance of the electronic value) stored in the non-contact type IC card 1. Here, the display section 104 may be an LCD, an organic EL display, and the like, but it is not limited to such. Further, the operation section 103 and the display section 104 may be made into one part like a touch screen, for example.

The control section 105 includes, for example, a demodulation circuit that demodulates based on the induced voltage generated at the antenna for external communication 107 by the carrier transmitted from the reader/writer 21, and an MPU, and may control the entire electronic wallet device 10. Further, the control section 105 may, for example, execute programs such as application program stored in the storage section 106, and may perform a predetermined calculation based on the execution of the program, command generation, control of the transmission and reception of various information, and the like. Further, the control section 105, by adopting various standards for card selection (described later), for example, may function as a card selection section automatically selecting a non-contact type IC card that responds to the communication request transmitted from the reader/writer 21 among the plurality of the non-contact type IC cards 1, that is, an appropriate card to be used for communication with the reader/writer 21 (or communication with the host device via the reader/writer). The details of the control section 105, including card selection function, will be described later.

The storage section 106 is a storage means included in the electronic wallet device 10, and may store various information. Here, the information to be stored in the storage section 106 may be various data such as application program to be executed by the control section 105, data obtained from the reader/writer 21, data obtained from each of the non-contact type IC cards 1, data to be used for selection of the non-contact type IC card 1 by the control section 105, or data processed by the control section 105, but it is not limited to such. Further, the storage section 106 may be a non-volatile memory such as an EEPROM or a flash memory, but it is not limited to such.

The antenna for external communication 107 is a communication antenna of the electronic wallet device 10 for communicating contactlessly with an external unit such as the reader/writer 21 of the host device 20. The antenna for external communication 107 may be configured with a resonant circuit having a coil with predetermined inductance and a capacitor having predetermined capacitance, for example. The antenna for external communication 107 is connected with the control section 105 and the antenna for card communication 109 via the selector 108.

The antenna for external communication 107 may generate, by the electromagnetic induction, an induced voltage in accordance with the carrier transmitted from the reader/writer 21, and may output the induced voltage to the control section 105 via the selector 108. Further, the induced voltage generated at the antenna for external communication 107 is sent to the antenna for external communication 109 via the selector 108, and a carrier corresponding to the carrier transmitted from the reader/writer 21 is sent from the antenna for card communication 109 to the non-contact type IC card 1.

The selector 108 is a so-called switching circuit, and it is connected with the antenna for external communication 107, the control section 105, and the antenna for card communication 109. The selector 108 has the function of selectively switching the non-contact type IC card 1 to be used for the communication with the reader/writer 21. Specifically, the selector 108, based on instruction (switching command) from the control section 105, connects the antenna for card communication 109 assigned for the non-contact type IC card 1 selected among the plurality of the non-contact type IC cards 1 held in the holding section 102 with the antenna for external communication 107 in a communicable manner. For example, when a non-contact type IC card 1A is selected by the control section 105, the selector 108 connects an antenna for card communication 109A with the antenna for external communication 107. Thus, it is made possible for the non-contact type IC card 1A to communicate contactlessly with the reader/writer 21 via the antenna for card communication 109A, the selector 108, and the antenna for external communication 107. As described above, the non-contact type IC card 1 held in the electronic wallet device 10 may communicate with the reader/writer 21 via the antenna for card communication 109 assigned for itself and the antenna for external communication 107 shared by all the cards.

By the configuration as shown in FIG. 4, for example, the electronic wallet device 10 according to the first embodiment of the present invention may select a desired non-contact type IC card among the plurality of the non-contact type IC cards carried together, and may make it communicate with the external unit. Next, card selection function of the electronic wallet device 10 will be described in detail.

### (Configuration Example of Electronic Wallet Device 10 according to First Embodiment: Details)

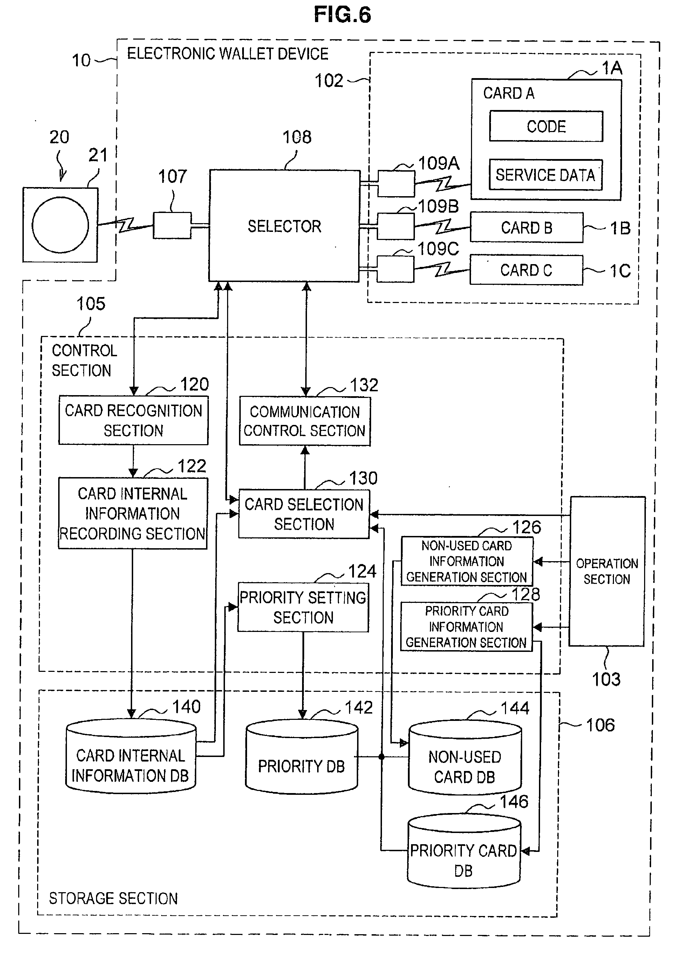

FIG. 6 is a block diagram showing a configuration example of the electronic wallet device 10 according to the first embodiment of the present invention. Incidentally, although FIG. 6 shows the electronic wallet device 10 as shown in FIG. 4, some of the components shown in FIG. 4 are simplified or not shown in FIG. 6. Further, in the following, as for the components described by referring to FIG. 4, the description will be omitted.

Referring to FIG. 6, the control section 105 may include a card recognition section 120, a card internal information recording section 122, a priority setting section 124, a non-used card information generation section 126, a priority card information generation section 128, a card selection section 130, and a communication control section 132. Further, the storage section 106 may store a card internal information database 140, a priority database 142, a non-used card database 144, and a priority card database 146. In the following, each of the sections will be described in detail.

The card recognition section 120 may recognize the non-contact type IC card 1 held in the holding section 102 of the electronic wallet device 10. Specifically, for example, by detecting insertion of the non-contact type IC cards 1A to 1C into each of the slots 102A to 102C of the holding section 102, or removal of the non-contact type IC cards 1A to 1C from each of the slots 102A to 102C, the card recognition section 120 may recognize whether the non-contact type IC cards 1 are held or not in each of the slots 102A to 102C.

Further, the card recognition section 120 may read out identification information such as code (service code, system code, etc.) and card ID from the non-contact type IC cards 1 held in the slots 102A to 102C of the holding section 102. Here, the code is information indicating the type of service the non-contact type IC card 1 relates to, that is, the type of the non-contact type IC card 1. The card recognition section 120 may judge, by the code stored in each of the non-contact type IC cards 1, whether the plurality of the non-contact type IC cards 1 are of similar type or of dissimilar type. As such, by the card recognition section 120 recognizing in advance the non-contact type IC cards 1 held in the holding section 102, it becomes possible, as follows, to select the non-contact type IC card 1 to be used for the communication with the reader/writer 21.

Further, for example, when a plurality of the non-contact type IC cards 1 are held in one slot as shown in FIG. 5C, the card recognition section 120 may judge whether each of the plurality of the non-contact type IC cards 1 is prepared for anti-collision or not. In case there is a non-contact type IC card non-prepared for anti-collision among the plurality of the non-contact type IC cards 1, the card recognition section 120 may, for example, display on the display section 104 a warning that "non-contact type IC card may not operate normally, because non-contact type IC cards prepared and not prepared for anti-collision are mixed in the slot." With the warning as the above displayed on the display section 104, a user may recognize the situation and move the non-contact type IC cards 1 held in the electronic wallet device 10 to a slot that can operate normally, and thus, the communication between the reader/writer 21 and the non-contact type IC card 1 may be made more stable. Incidentally, the operation of the card recognition section 120 according to the embodiment of the present invention where a non-contact type IC card not prepared for anti-collision exists among the plurality of the non-contact type IC cards 1 is not limited to the above described. For example, when a non-contact type IC card not prepared for anti-collision exists among a plurality of the non-contact type IC cards 1 in a slot, it is possible for the card recognition section 120 to not read out various information such as codes, identification information, and the like of the non-contact type IC cards in the slot.

The card internal information recording section 122, based on the various information read out by the card recognition section 120, records or updates, in the storage section 106, information relating to the non-contact type IC card 1 held in the holding section 102 (hereinafter referred to as "card information"). Here, FIG. 6 shows a configuration where the card internal information recording section 122 records (registers)/updates the card information in the card internal information DB 140 (DataBase). However, the storage means for card information in the storage section 106 is not limited to be a DB format. For example, the card internal information recording section 122 may record in the storage section 106 the card information corresponding to each of the non-contact type IC cards 1 as a file. Further, the card information may be code or identification information, for example, but it is not limited to such.

### (Method for Recording/Updating Card Information)

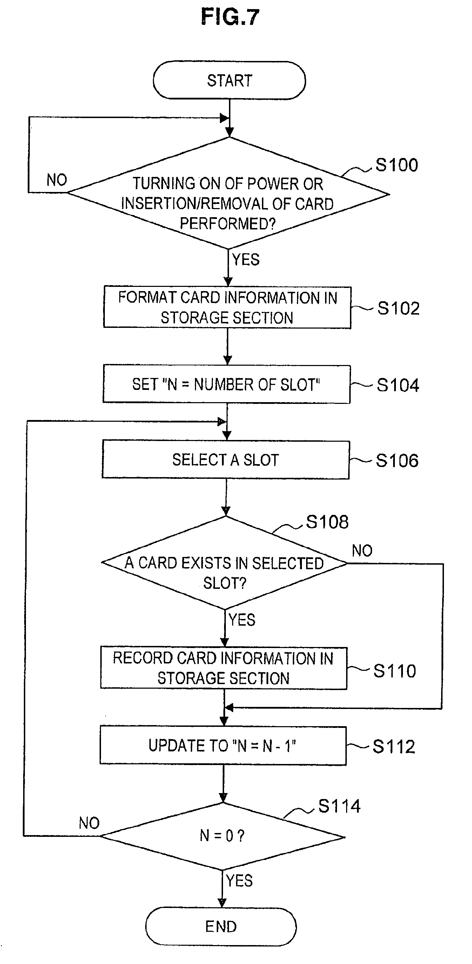

FIG. 7 is a flow chart showing an example of a method for recording/updating card information according to the first embodiment of the present invention.

First, the electronic wallet device 10 determines whether the power of the electronic wallet device 10 is turned on, or whether a non-contact type IC card is inserted/removed or not (step S100). Here, the electronic wallet device 10 may determine whether the power is turned on, by, for example, the card recognition section 120 detecting operation signal corresponding to the operation by the operation section 103. Further, the electronic wallet device 10 may determine whether the non-contact type IC card is inserted into/removed from each of the slots 102A to 102C, by, for example, the card recognition section 120 detecting a detection signal from a card insertion detection sensor provided for each of the slots 102A to 102C of the holding section 102. Incidentally, it is needless to say that determination means at step S100 is not limited to be above.

When it is not determined in step S100 that the power is turned on or the non-contact type IC card is inserted or removed, the electronic wallet device 10 does not record/updates the card information.

Further, when it is determined in step S100 that the power is turned on or the non-contact type IC card is inserted or removed, the electronic wallet device 10 initializes the card information stored in the storage section 106 (step S102). Here, in the electronic wallet device 10 using the method as shown in FIG. 7, card information is updated by recording the card information after formatting the card information in step S102. Accordingly, in the electronic wallet device 10 using the method as shown in FIG. 7, consistency of card information stored in the storage section 106 and the non-contact type IC card 1 held in the holding section 102 may be achieved. Incidentally, it is needless to say that the method for updating the card information according to the embodiment of the present invention is not limited to initialization, and, for example, may use overwriting update.

When the card information is formatted in step S102, the electronic wallet device 10 sets "N = number of slots" (step S104). Here, the value of N set in step S104 may be stored in a storage means, by providing the card internal information recording section 122 (or the control section 105) with the storage means, for example. Here, the storage means of the card internal information recording section 122 may be a volatile memory such as a SDRAM (Synchronous Dynamic Random Access Memory) and a SRAM (Static Random Access Memory). However, it is not limited to such, and it may be a non-volatile memory such as s flash memory, for example. Incidentally, it is needless to say that the value of N may be, for example, recorded in the storage section 106 of the electronic wallet device 10, and the card internal information recording section 122 may read out the value of N from the storage section 106 as needed.

When the value of N is set in step S104, the electronic wallet device 10 selects one slot (step S106). Here, the selection of the slot in step S104 may be performed in a prespecified order (in order of slot 102A -> slot 102B -> slot 102C, for example) or it may be random.

When a slot is selected in step S106, the electronic wallet device 10 determines whether there is a non-contact type IC card or in the slot selected in step S104 or not (step S108). Here, the determination in step S108 may be based on, for example, the detection signal from the card insertion detection sensor provided for each of the slots 102A to 102C of the holding section 102, but it is not limited to such. For example, the determination in step S108 may be performed in accordance with the result of polling for the slot selected in step S106 by the card recognition section 120.

When it is determined that there is no non-contact type IC card in the slot in step S 108, the electronic wallet device 10 updates the value of N to "N = N - 1" (step S112).

Further, when it is determined that there is a non-contact type IC card in the slot in step S108, the electronic wallet device 10 records the card information in the storage section 106 (step S110). Then, the electronic wallet device 10 updates the value of N to "N = N - 1" (step S 112).

When the value of N is updated in step S 112, the electronic wallet device 10 determines whether "N = 0" or not (S 114).

When it is not determined that the value of N is "N = 0" in step S 114, the electronic wallet device 10 repeats the processings from step S106. Further, when the value of N is determined to be "N = 0" in step S 114, recording/updating of the card information is terminated.

By using the method as shown in FIG. 7, for example, the electronic wallet device 10 stores card information of the non-contact type IC card 1 held in the holding section 102 whenever power of the electronic wallet device 10 is turned on, or the non-contact type IC card 1 is attached to/detached from (inserted into/removed from) the electronic wallet device 10. Incidentally, in FIG. 7, the trigger for recording card information of the non-contact type IC card 1 held in the holding section 102 is the turning on of the power of the electronic wallet device 10 or the attaching/detaching of the non-contact type IC card 1. However, it is needles to say that the trigger for recording card information according to the embodiment of the present invention is not limited to be as such. For example, the electronic wallet device 10 may record card information periodically after the turning on of power.

Referring again to FIG. 6, each component of the electronic wallet device 10 will be described. The priority setting section 124 sets the priority of the non-contact type IC cards 1 to be used for communication with the reader/writer 21 for each service based on card information, stored in the storage section 106 (stored in the card internal information DB 140), of each of the non-contact type IC cards 1 held in the holding section 102. For example, the priority setting section 124 determines whether a plurality of non-contact type IC cards relating to similar service exist or not based on code (for example, service code) included in the card information. Here, if it is determined that a plurality of non-contact type IC cards relating to similar service do not exist, the priority setting section 124 sets high priority for each of the non-contact type IC cards relating to each service, for example. Further, if it is determined that a plurality of non-contact type IC cards relating to similar service do exist, the priority setting section 124 sets the priority for each of the non-contact type IC cards relating to the service based on the codes of the respective non-contact type IC cards, for example. For example, when a service for which a plurality of the non-contact type IC cards exist is a service relating to public transportation, the priority setting section 124 may set high priority for a non-contact type IC card having the function as a commuter pass.

Further, the priority setting section 124 may record the priority set for each service in the priority DB 142, for example.

The non-used card information generation section 126 generates a non-used card information indicating a non-used card, and records the information, for example, in the non-used card DB 144 of the storage section 106. Here, when a user of the electronic wallet device 10 specifies, by using the operation section 103, a non-contact type IC card that is not to be used for communication with the reader/writer 21 (a non-used card) among the plurality of the non-contact type IC cards 1 held in the electronic wallet device 10, the non-used card information generation section 126 may generate non-used card information and store the information in the storage section 106.

The priority card information generation section 128 generates priority card information indicating a priority card, and, for example, records the information in the priority card DB 146 of the storage section 106. Here, by a user of the electronic wallet device 10 specifying, by using the operation section 103, a non-contact type IC card that is to be used preferentially (a priority card) when communicating with the reader/writer 21 among the plurality of the non-contact type IC cards 1 held in the electronic wallet device 10, the priority card information generation section 128 may generate the priority card information and store the information in the storage section 106.

The card selection section 130 selects a non-contact type IC card to be used for communication with the reader/writer 21 among the non-contact type IC cards 1 held in the holding section 102. The card selection section 130 may perform a card selection process when, for example, a communication request (request command, for example) relating to a predetermined service is received from the reader/writer 21 of the host device 20 via the antenna for external communication 107 (for example, at the moment of starting the transaction of the reader/writer 21 and the electronic wallet device 10). Incidentally, when there is only one non-contact type IC card 1 held in the holding section 102, the card selection section 130 may select the non-contact type IC card in advance.

Here, the card selection section 130 may select a non-contact type IC card to be used for communication with the reader/writer 21 with the following procedures, for example.

### (a) Selection using Card Information

The card selection section 130 selects, using card information, non-contact type IC cards corresponding to code (system code, service code indicating the service provided by the host device 20, for example) included in the communication request relating to a predetermined service transmitted from the reader/writer 21.

### (b) Selection based on Other Selection Standards

The card selection section 130 selects a non-contact type IC card among the non-contact type IC cards selected in the above described (a) by sequentially applying other selection standards.

The other selection standards of (b) may be the following (b-1) to (b-3), for example.

### (b-1) Selection based on Information of Set Priority

The card selection section 130, for example, reads out information of priority from the priority DB 142, and selects a non-contact type IC card 1 with high priority indicated by the information of priority. With a non-contact type IC card 1 with high priority selected, in case a plurality of non-contact type IC cards 1 for public transportation are held in the holding section 102, for example, a non-contact type IC card having the function of a commuter pass (non-contact type IC card with high priority) is automatically selected, and the non-contact type IC card may be used.

### (b-2) Selection based on Non-Used Card Information

The card selection section 130, for example, reads out non-used card information from the non-used card DB 144, and selects a non-contact type IC card 1 by excluding from the selection option the non-contact type IC card 1 indicated by the non-used card information. By excluding the non-contact type IC card 1 indicated by the non-used card information from the selection option, the electronic wallet device 10 is prevented from automatically selecting a non-contact type IC card 1 that a user does not desire to use, and the non-contact type IC card 1 may be prevented from being used, for example.

### (b-3) Selection based on Priority Card Information

The card selection section 130, for example, reads out priority card information from the priority card DB 146, and selects a non-contact type IC card 1 indicated by the priority card information. By selecting the non-contact type IC card 1 indicated by the priority card information, the electronic wallet device 10 may automatically select a non-contact type IC card 1 that a user desires to use, and the non-contact type IC card may be used, for example.

By performing the selections as indicated by the above (b-1) to (b-3), for example, the card selection section 130 may select a non-contact type IC card. Incidentally, the other selection standards according to the embodiment of the present invention are not limited to the above (b-1) to (b-3). For example, the electronic wallet device 10 may select a non-contact type IC card to be used for communication with the reader/writer 21 based on information of the current location of the electronic wallet device 10 (that is, the location of service provision where communication with the reader/writer 21 is performed) calculated using a positioning system (not shown) such as a GPS (Global Positioning System).

The card selection section 130 may select a non-contact type IC card to be used for communication with the reader/writer 21 based on the above (a) or the above (a) and (b), for example.

Further, the card selection section 130 may have, besides the automatic selection functions as described above, a manual selection function. Here, the manual selection function of the card selection section 130 is a function of selecting a non-contact type IC card 1 to be used for communication with the reader/writer 21 when the non-contact type IC card 1 is selected by the user using the operation section 103. The electronic wallet device 10 may be set, by user input, for example, to either of the automatic selection mode where the electronic wallet device 10 automatically selects a card or the manual selection mode where a user selects a card manually.

The communication control section 132 controls the selector 108 based on result of the card selection in the card selection section 130. With the communication control section 132 controlling the selector 108, the non-contact type IC card 1 selected by the card selection section 130 and the reader/writer 21 of the host device 20 may be connected with each other in a communicable manner via the antenna for external communication 107 and the antenna for card communication 109. For example, if the non-contact type IC card 1A is selected among the non-contact type IC cards 1A to 1C by the card selection section 130, the communication control section 132 instructs the selector 108 to connect the antenna for card communication 109A and the antenna for external communication 107. In response to this, the selector 108 connects the non-contact type IC card 1A with the reader/writer 21 in a communicable manner via the antenna for card communication 109A and the antenna for external communication 107. As a result, as described by referring to FIG. 3, the non-contact type IC card 1A and the reader/writer 21 may transmit and receive between each other various command and data relating to a predetermined service.

As described above, the communication control section 132 may connect only the non-contact type IC card 1 selected by the card selection section 130 among the plurality of the non-contact type IC cards 1 with the reader/writer 21 in a communicable manner. Thus, even when non-contact type IC cards 1 of similar types that are not prepared for anti-collision are held in the electronic wallet device 10, it can be prevented from being incommunicable because of the plurality of the non-contact type IC cards 1 responding simultaneously to the communication request from the reader/writer 21. Accordingly, even when the plurality of the non-contact type IC cards 1 in the electronic wallet device 10 exist simultaneously within the communication range of the reader/writer 21, with only the appropriate non-contact type IC card 1 communicating with the reader/writer 21, a service desired by a user may be realized.

As described above, the electronic wallet device 10 according to the first embodiment of the present invention reads out card information from the non-contact type IC card 1 held in the holding section 102 and records it in the storage section 106 when, for example, power is turned on or attaching/detaching of the non-contact type IC card 1 is performed. Further, the electronic wallet device 10 may automatically select a non-contact type IC card to be used for communication with the reader/writer 21 and may connect the selected non-contact type IC card with the reader/writer 21 in a communicable manner, by, for example, using codes included in both card information (or card information and other standards) and a communication request relating to a predetermined service transmitted from the reader/writer 21. Accordingly, even when non-contact type IC cards 1 of similar types that are not prepared for anti-collision are held in the electronic wallet device 10, the plurality of the non-contact type IC cards 1 may be prevented from responding simultaneously to the communication request from the reader/writer 21.

Further, the electronic wallet device 10 may set a non-contact type IC card not to be used or a non-contact type IC card to be used preferentially according to a user input, for example. Since the electronic wallet device 10 may automatically select a non-contact type IC card to be used for communication with the reader/writer 21 based on the setting in accordance with the user input, it is possible to realize a variety of services using a non-contact type IC card desired by the user to be used.

### (Program according to First Embodiment)

With a program for making a computer function as the electronic wallet device 10 according to the first embodiment, it is made possible to select a desired non-contact type IC card among a plurality of the non-contact type IC cards carried together and make it communicate with the external unit, regardless of whether the non-contact type IC cards are prepared for anti-collision or not.

### (Communication Method according to First Embodiment)

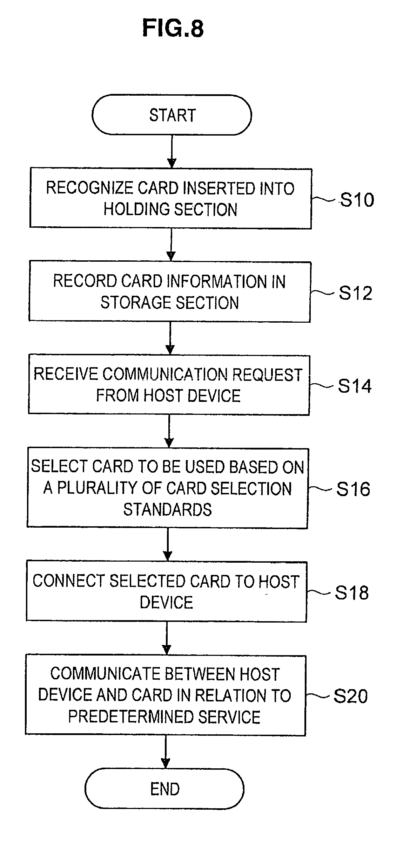

Next, a communication method of the electronic wallet device 10 according to the first embodiment will be described. FIG. 8 is a flow chart showing an example of a communication method of the electronic wallet device 10 according to the first embodiment of the present invention.

The electronic wallet device 10 recognizes a non-contact type IC card inserted into the holding section 102 (step S10). In step S10, when the insertion of the non-contact type IC card is recognized, the electronic wallet device 10 records card information in the storage section 106 by, for example, method for recording/updating card information as shown in FIG. 7 (step S12). Incidentally, in the process of step S12, trigger is not limited to the insertion of the non-contact type IC card, and it may be turning on of power of the electronic wallet device 10, for example.

For example, when the electronic wallet device 10 is positioned within the communication range of the reader/writer 21 by a user holding the electronic wallet device 10 over the reader/writer 21 of the host device 20, the electronic wallet device 10 receives a communication request from the reader/writer 21 of the host device 20 (step S14). Here, a communication request to be received in step S14 is, for example, constantly sent out by the polling operation of the reader/writer 21, and may include code indicating a service the host device 20 provides.

When a communication request from the reader/writer 21 is received in step S14, the electronic wallet device 10 selects a non-contact type IC card to be used based on a plurality of selection standards (step S16). Here, the selection in step S16 may be performed by the following (a) or (a) and (b), for example. Incidentally, when selection of a non-contact type IC card is completed by the following (a), it is assumed that the process of step S 16 was performed by one selection standard.
(a) Selection using card information
(b) Selection by other selection standard

When a non-contact type IC card is selected in step S16, the electronic wallet device 10 connects the selected non-contact type IC card and the reader/writer 21 of the host device 20 (step S18). Here, the connection in step S18 may be performed by connecting the antenna for card communication 109 assigned for the selected non-contact type IC card 1 and the antenna for external communication 107 by, for example, the communication control section 132 of the electronic wallet device 10 controlling the selector 108. By the process of step S 18, it is possible to make only the selected non-contact type IC card 1, among the plurality of the non-contact type IC cards 1 enclosed by the shield 110, communicate with the reader/writer 21.

In step S 18, with the selected non-contact type IC card and the reader/writer 21 of the host device 20 connected with each other, the selected non-contact type IC card and the reader/writer 21 may communicate contactlessly with each other (step S20).

### (Concrete Example of Communication Method according to First Embodiment)

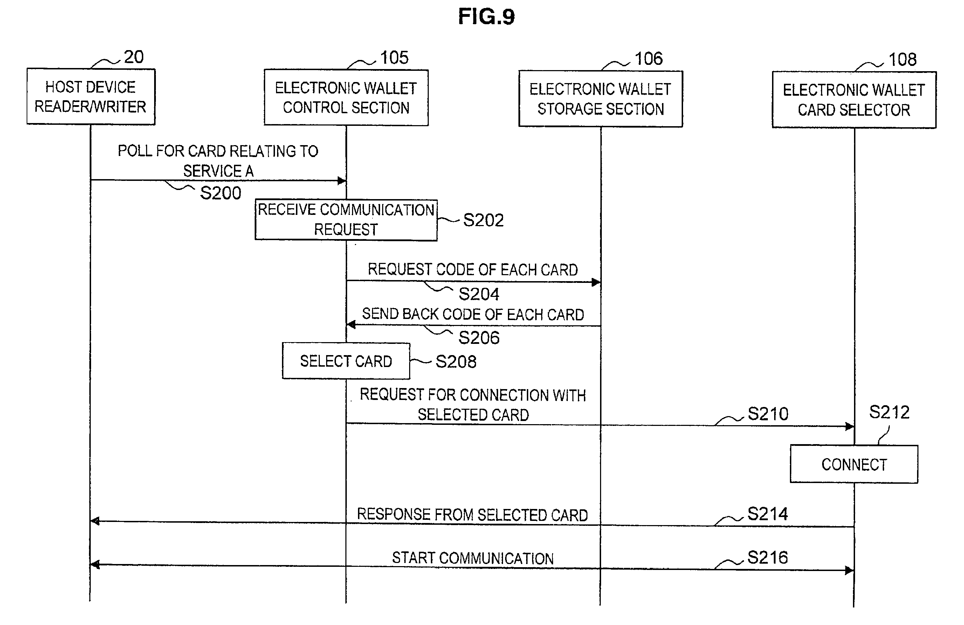

Next, a communication method according to the first embodiment will be described more specifically. FIG. 9 is a sequence diagram showing an example of a communication method of the electronic wallet device 10 according to the first embodiment of the present invention. Here, FIG. 9 shows an example of communication between the reader/writer 21 of the host device 20 dealing with a service A and the electronic wallet device 10.

The reader/writer 21 of the host device 20 performs polling for a non-contact type IC card 1 relating to the service A (step S200). Here, the reader/writer 21 may constantly or periodically perform polling by constantly transmitting a carrier. That is, the reader/writer 21 may continuously send out a communication request to a non-contact type IC card 1 to search for non-contact type IC card 1 relating to the service A within its communication range. Here, the communication request may be a "REQC command" indicated in JIS:X6319-4, for example, and in the "REQC command", system code may be included that indicates a service the reader/writer 21 deals with.

When a user holds the electronic wallet device 10 over the reader/writer 21 during polling by the reader/writer 21, the control section 105 of the electronic wallet device 10 receives the communication request sent out from the reader/writer 21 (step S202). Here, in step S202, the control section 105 may receive a communication request by, for example, demodulating the induced voltage generated at the antenna for external communication 107 by the electromagnetic induction. In response to the receiving of the communication request in step S202, the control section 105 executes the process of selecting a non-contact type IC card 1 to be used for communication with the reader/writer 21 among the plurality of the non-contact type IC cards 1A to 1C held in the holding section 102 of the electronic wallet device 10 (steps S204 to S208).

When the communication request is received in step S202, the control section 105 requests the storage section 106 of the electronic wallet device 10 for code of each of the non-contact type IC cards stored in the storage section 106 (step S204). Here, by using the method as shown in FIG. 7, card information (for example, code, identification information) of a non-contact type IC card 1 held in the holding section 102 is stored in the storage section 106.

When a request for obtaining a code of each of the non-contact type IC cards is made in step S204, the storage section 106 sends back the code of each of the non-contact type IC cards in response to the request (step S206). Here, the sending back of codes in step S206 may be realized by the control section 105 making the storage section 106 read out the code, for example. However, it is not limited to such.

In step S206, when the code of each of the non-contact type IC cards stored in the storage section 106 are sent back, the control section 105 selects a non-contact type IC card to be used for communication with the reader/writer 21 by using the obtained code of each of the non-contact type IC cards (step S208).

The selection process in step S208 may be performed by matching respectively the obtained code of each of the non-contact type IC cards with code included in the communication request relating to a predetermined service transmitted from the reader/writer 21, for example. More specifically, the control section 105 may select a non-contact type IC card corresponding to the code matching the code included in the communication request relating to a predetermined service transmitted from the reader/writer 21.

Incidentally, in addition to the matching process described above, the control section 105 may perform selection by other selection standard. Here, selection by other standard may be selection based on information of the set priority as described above, selection based on the non-used card information, selection based on the priority card information, or selection based on position calculation data. However, it is not limited to such. By selecting a non-contact type IC card for communicating with the reader/writer 21 by using a plurality of selection standards, the control section 105 may select a non-contact type IC card more flexibly.

When a non-contact type IC card for communicating with the reader/writer 21 is selected in step S208, the control section 105 sends request for access to the selected non-contact type IC card to the selector 108 of the electronic wallet device 10 (step S210).

When the selector 108 receives the connection request of step S210, in response to the connection request, it connects the antenna for card communication 109 assigned for the selected non-contact type IC card and the antenna for external communication 107 (step S212).

In step S212, with the antenna for card communication 109 assigned for the selected non-contact type IC card and the antenna for external communication 107 connected with each other, the selected non-contact type IC card receives the communication request transmitted from the reader/writer 21 in step S200 and responds to the communication request (step S214). Then, communication relating to a predetermined service is initiated between the reader/writer 21 and the selected non-contact type IC card (step S216).

With the communication method as shown in FIGS. 8 and 9, for example, the electronic wallet device 10 according to the first embodiment may select a desired non-contact type IC card among a plurality of the non-contact type IC cards carried together and make it communicate with the external unit, regardless of whether the non-contact type IC cards are prepared for anti-collision or not.

### (Other Example of Communication Method according to First Embodiment)

The communication method as shown in FIGS. 8 and 9 as described above performs selection by using card information stored in the storage section 106. However, the communication method according to the first embodiment of the present invention is not limited to the above. Next, another example of the communication method according to the first embodiment will be described.

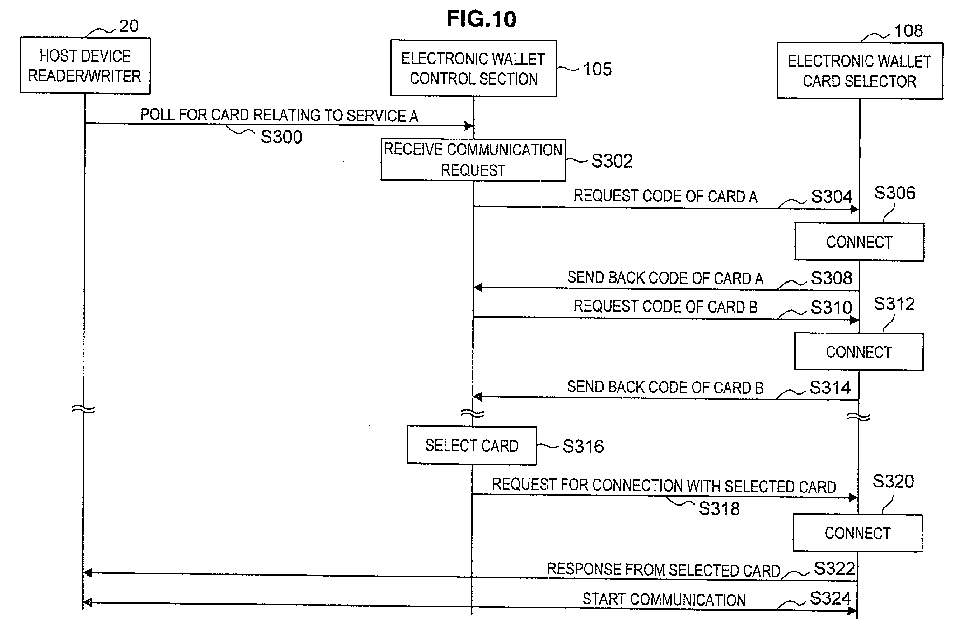

FIG. 10 is a sequence diagram showing another example of a communication method of the electronic wallet device 10 according to the first embodiment of the present invention.

As in step S200 of FIG. 9, the reader/writer 21 of the host device 20 performs polling for a non-contact type IC card 1 relating to the service A (step S300).

When a user holds the electronic wallet device 10 over the reader/writer 21 during polling by the reader/writer 21, as in step S202 of FIG. 9, the control section 105 of the electronic wallet device 10 receives a communication request sent out from the reader/writer 21 (step S302).

When the control section 105 receives the communication request in step S302, it sends request for obtaining a code of a non-contact type IC card 1A to the selector 108 of the electronic wallet device 10 (S304).

The selector 108 that received the code obtaining request for the non-contact type IC card 1A in step S304 connects the control section 105 and the antenna for card communication 109 assigned for the non-contact type IC card 1A with each other and signals the non-contact type IC card 1A of the request for obtaining the code (step S306).

The non-contact type IC card 1 A that is signaled of the code obtaining request in step S308 sends back a code in response to the code obtaining request (step S308).

When the control section 105 obtains the code of the non-contact type IC card 1A in step S308, it sends code obtaining request for the non-contact type IC card 1B, similarly to step S304 (step S310). Then, as in steps S306 and S308, the selector 108 connects the control section 105 and the antenna for card communication 109 assigned for the non-contact type IC card 1B with each other (step S312), and the non-contact type IC card 1B sends back the code (step S314). The same process is performed for the non-contact type IC card 1C, and the control section 105 obtains code from the non-contact type IC card 1C.

When code of each of the non-contact type IC cards 1 is obtained in steps S304 to S 14 and the like, the control section 105 selects a non-contact type IC card by using the obtained codes (step S316). Here, the control section 105 may perform the process in step S316, similarly to step S208 of FIG. 9.

When a non-contact type IC card to be used for communication with the reader/writer 21 is selected in step S316, the control section 105 requests to be connected to the selected non-contact type IC card to the selector 108 of the electronic wallet device 10 (step S318), similarly to step S210 of FIG. 9.

When the selector 108 receives the connection request of step S318, it connects the antenna for card communication 109 assigned for the selected non-contact type IC card and the antenna for external communication 107 with each other in response to the connection request (step S320), similarly to step S212 of FIG. 9.

With the antenna for card communication 109 assigned for the selected non-contact type IC card and the antenna for external communication 107 connected with each other in step S320, the selected non-contact type IC card receives the communication request transmitted from the reader/writer 21 in step S300, and responds to the communication request (step S322). Then, communication relating to a predetermined service is initiated between the reader/writer 21 and the selected non-contact type IC card (step S324).

The communication method as shown in FIG. 10 differs from the communication method as shown in FIG. 9 in that code is obtained as needed from the respective non-contact type IC cards 1 held in the holding section 102. However, the communication method as shown in FIG. 10 may perform selection by using code corresponding to the non-contact type IC card 1 held in the holding section 102. Accordingly, even when using the communication method as shown in FIG. 10, for example, the electronic wallet device 10 may select a desired non-contact type IC card among a plurality of the non-contact type IC cards carried together and make it communicate with the external unit, regardless of whether the non-contact type IC cards are prepared for anti-collision or not.

### (Second Embodiment)

In the above, as the electronic wallet device 10 according to the first embodiment, an electronic wallet device capable of selecting, by using card information of non-contact type IC card held in the holding section, a non-contact type IC card for communicating with a reader/writer, and making the selected non-contact type IC card directly communicate with the reader/writer is described. However, the electronic wallet device according to the embodiment of the present invention is not limited to be configured to make the selected non-contact type IC card directly communicate with the reader/writer, and it can make the selected non-contact type IC card virtually communicate with the reader/writer. Thus, next, an electronic wallet device capable of selecting a non-contact type IC card for communicating with a reader/writer, and making the selected non-contact type IC card virtually communicate with the reader/writer will be described.

### (Configuration Example of Electronic Wallet Device 30 according to Second Embodiment: Outline)

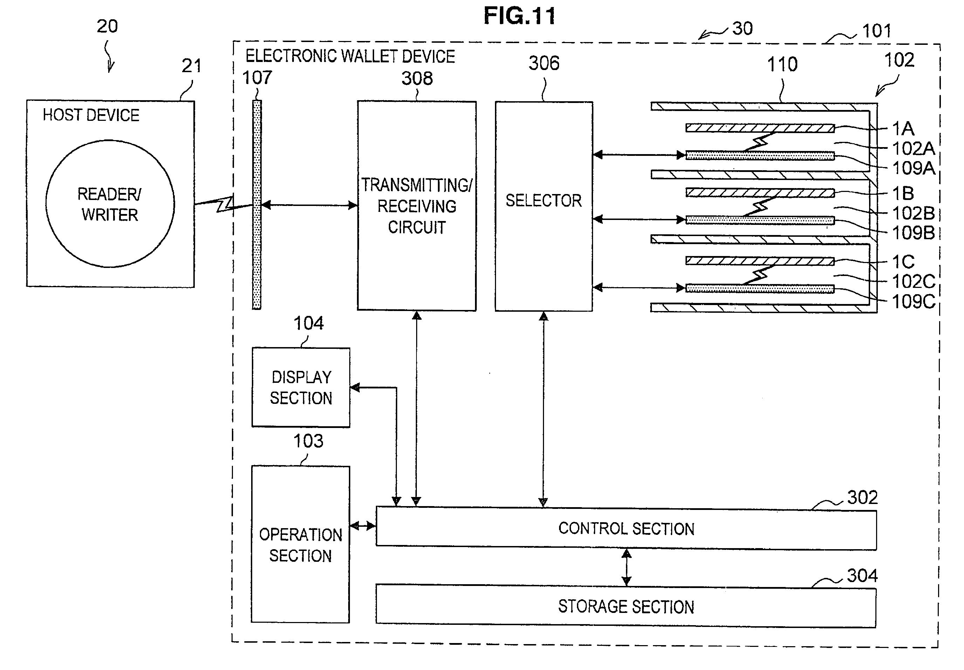

FIG. 11 is a block diagram showing a schematic configuration example of an electronic wallet device 30 according to the second embodiment of the present invention.

Referring to FIG. 11, the electronic wallet device 30 may include a housing 101, a holding section 102, a display section 103, an operation section 104, a control section 302, a storage section 304, an antenna for external communication 107, a selector 306, a transmitting/receiving circuit 308, antennas for card communication 109A to 109C, and a shield 110.

The housing 101, the holding section 102, the display section 103, the operation section 104, the antenna for external communication 107, the antennas for card communication 109A to 109C, and the shield 110 according to the second embodiment may have the same functions and configurations as those of the electronic wallet device 10 according to the first embodiment.

The control section 302 may include an MPU, for example, and may control the entire electronic wallet device 30. Further, the control section 302 may, for example, execute programs such as application program stored in the storage section 304, and may perform a predetermined calculation based on the execution of the program, command generation, control of transmission and reception of various information.

Further, the control section 302 may obtain information in each of non-contact type IC cards 1 (hereinafter referred to as "internal information") from the respective non-contact type IC cards 1 held in the holding section 102, and may record in the storage section 304 internal information of the respective non-contact type IC cards 1 as virtual card information. The control section 302 selects, by the same selection method of the control section 105 according to the first embodiment, for example, virtual card information to be used from the virtual card information stored in the storage section 304 by using the virtual card information stored in the storage section 304. Then, by using the selected virtual card information, the control section 302 may perform data processing in accordance with communication request relating to a predetermined service (various processing requests), and data transmitted from the reader/writer 21, and may update the selected virtual card information in accordance with the processing result. Further, the control section 302 may have response signal corresponding to the processing result by the data processing transmitted to the reader/writer 21.

As described above, the control section 302 may select virtual card information for dealing with the communication request from the reader/writer 21, among the virtual card information corresponding to the respective non-contact type IC cards 1 held in the holding section, may perform various data processings by using the selected virtual card information, and may respond to the reader/writer 21. Accordingly, the electronic wallet device 30 according to the second embodiment of the present invention may make the non-contact type IC card corresponding to the selected virtual card information virtually communicate with the reader/writer 21. The details of the control section 302 will be described later.

The storage section 304 is a storage means included in the electronic wallet device 30, and may store various information. Here, the information to be stored in the storage section 304 may be various data such as application program to be executed by the control section 302, data obtained from the reader/writer 21, data to be used for selection of the non-contact type IC card 1 by the control section 302, data processed by the control section 302, or virtual card information data, but it is not limited to such. Further, the storage section 304 may be a non-volatile memory such as an EEPROM or a flash memory, but it is not limited to such.

The selector 306 is a so-called switching circuit, and is connected with the control section 302 and the antenna for card communication 109, and connects the control section 302 and the antenna for card communication 109 assigned for each of the non-contact type IC cards 1 with each other.

The transmitting/receiving circuit 308 may include a demodulation circuit that performs demodulation based on the induced voltage generated at the antenna for external communication 107 by a carrier transmitted from the reader/writer 21, and a load modulation circuit that performs load modulation. By including the transmitting/receiving circuit 308, the electronic wallet device 30 may demodulate communication request and various processing requests transmitted from the reader/writer 21 and data, and also, respond to the reader/writer 21.

With the configuration as shown in FIG. 11, for example, the electronic wallet device 30 according to the second embodiment of the present invention stores each of the plurality of the non-contact type IC cards carried together as virtual card information, and selects virtual card information corresponding to a desired non-contact type IC card from the virtual card information. Then, the electronic wallet device 30 may communicate with an external unit by using the selected virtual card information. Accordingly, the electronic wallet device 30 may make the non-contact type IC card corresponding to the selected virtual card information virtually communicate with the external unit. Next, the function of virtual communication in the electronic wallet device 30 will be described in detail.

### (Configuration Example of Electronic Wallet Device 30 according to Second Embodiment: Details)

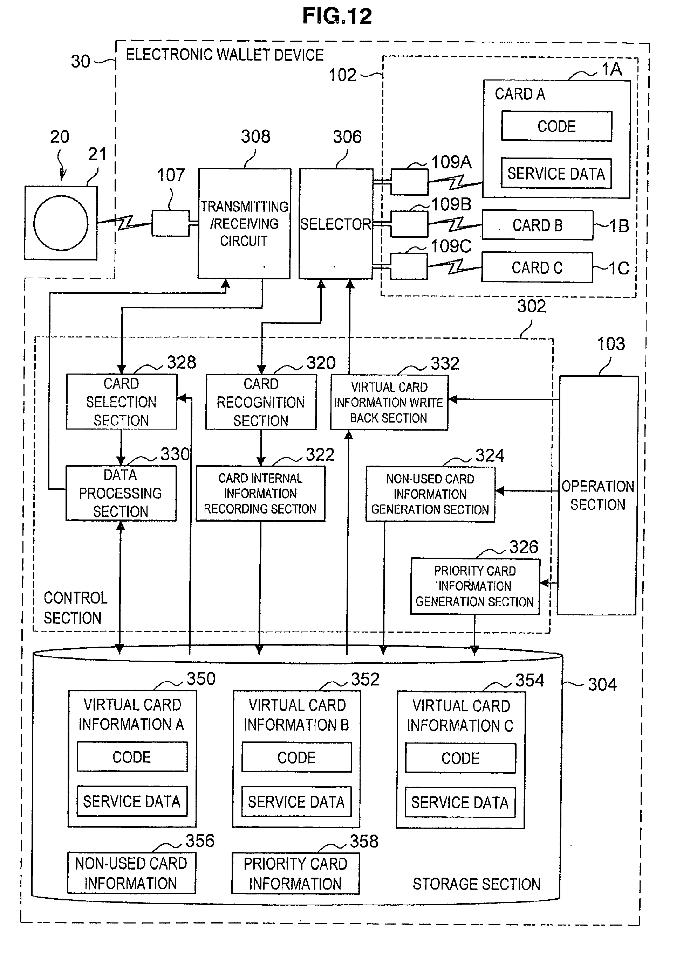

FIG. 12 is a block diagram showing a configuration example of the electronic wallet device 30 according to the second embodiment of the present invention. Incidentally, FIG. 12 shows the electronic wallet device 30 as shown in FIG. 11. However, some of the components shown in FIG. 11 are simplified or not shown in FIG. 11. Further, in the following, as for the components described by referring to FIG. 11, the description will be omitted.

Referring to FIG. 12, the control section 302 may include a card recognition section 320, a card internal information recording section 322, a non-used card information generation section 324, a priority card information generation section 326, a card selection section 328, a data processing section 330, and a virtual card information write back section 332. Further, the control section 302 may include a priority setting section (not shown) similarly to the control section 105 according to the first embodiment.

The card recognition section 320 may recognize a non-contact type IC card 1 held in the holding section 102 of the electronic wallet device 30. Specifically, for example, by detecting insertion of the non-contact type IC cards 1 A to 1C into each of the slots 102A to 102C of the holding section 102, the card recognition section 320 may recognize whether the non-contact type IC card 1 is held or not in each of the slots 102A to 102C.

Further, when the insertion of a non-contact type IC card 1 is detected, the card recognition section 320 obtains the internal information of the detected non-contact type IC card 1. Here, the card recognition section 320 obtains as the internal information various information stored in the non-contact type IC card 1 such as code (service code, system code, etc.), identification information such as card ID, service data stored in the non-contact type IC card 1, and the like. Incidentally, although the card recognition section 320 may obtain all of the information stored in the non-contact type IC card 1, it is not limited to such, and the card recognition section 320 may obtain only the information the reading out of which is not restricted, for example.

The card internal information recording section 322 records in the storage section 304, based on the internal information obtained by the card recognition section 320, virtual card information corresponding to the non-contact type IC card 1 held in the holding section 102. FIG. 12 shows an example where the card internal information recording section 322 records virtual card information A 350 corresponding to the non-contact type IC card 1A, virtual card information B 352 corresponding to the non-contact type IC card 1B, and virtual card information C 354 corresponding to the non-contact type IC card 1C. Incidentally, although FIG. 12 shows an example where the virtual card information is recorded in a file format, the method for recording the virtual card information according to the embodiment of the present invention is not limited to such, and the information may be recorded in a DB format, for example.

### (Method for Recording Virtual Card Information)

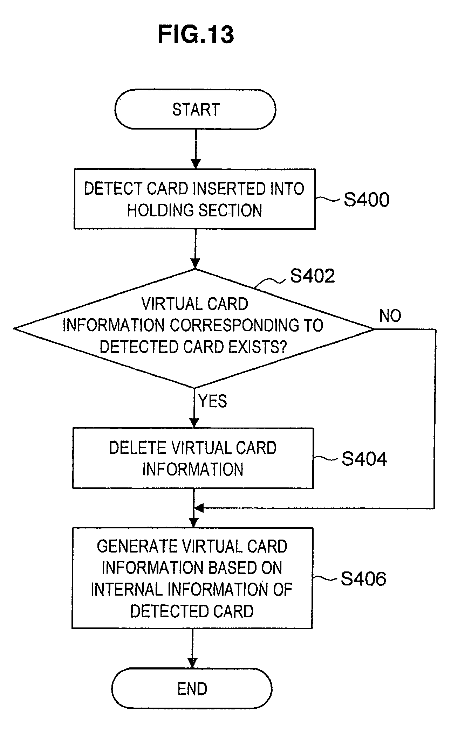

Here, a method for recording virtual card information according to the second embodiment of the present invention will be described. FIG. 13 is a flow chart showing an example of a method for recording virtual card information according to the second embodiment of the present invention.

The electronic wallet device 30 detects a non-contact type IC card inserted into the holding section (step S400). The detection in step S400 may be performed by the card recognition section 320 detecting a detection signal from a card insertion detection sensor provided for each of the slots 102A to 102C of the holding section 102. However, it is not limited to such.

When a non-contact type IC card is detected in step S400, the electronic wallet device 30 determines whether or not there is virtual card information corresponding to the detected non-contact type IC card (step S402). The determination in step S402 may be performed by matching process using card ID of the detected non-contact type IC card and card ID of the virtual card information stored in the storage section 304. However, it is not limited to such.

When it is determined in step S402 that there is virtual card information corresponding to the detected non-contact type IC card, the electronic wallet device 30 deletes the corresponding virtual card information (step S404). Then, the electronic wallet device 30 generates virtual card information based on internal information of the non-contact type IC card detected in step S400 and records it in the storage section 304 (step S406).

Further, when it is determined in step S402 that there is no virtual card information corresponding to the detected non-contact type IC card, the electronic wallet device 30 generates virtual card information based on internal information of the non-contact type IC card detected in step S400 and records it in the storage section 304 (step S406).

By using the method as shown in FIG. 13, for example, the electronic wallet device 30 may record virtual card information in the storage section 304.

Referring again to FIG. 12, components of the electronic wallet device 30 will be described. The non-used card information generation section 324 generates non-used card information indicating a non-used card and stores the information in the storage section 304. Here, the non-used card information generation section 324 may generate non-used card information and store the information in the storage section 304, similarly to the non-used card information generation section 126 according to the first embodiment, by, for example, a user of the electronic wallet device 30 specifying a non-used card by using the operation section 103. Incidentally, although FIG. 12 shows an example where the non-used card information is recorded in a file format, the method for recording the non-used card information according to the embodiment of the present invention is not limited to such, and the information may be recorded in a DB format, for example. Further, in FIG. 12, one non-used card information 356 is stored in the storage section 304. However, it is not limited to such, and the storage section 304 may store a plurality of non-used card information, for example.

The priority card information generation section 326 generates priority card information indicating a priority card and, for example, stores the information in the storage section 304. Here, the priority card information generation section 326 may generate priority card information and store the information in the storage section 304, similarly to the priority card information generation section 128 according to the first embodiment, by, for example, a user of the electronic wallet device 30 specifying a priority card by using the operation section 103. Incidentally, although FIG. 12 shows an example where the priority card information is recorded in a file format, the method for recording the priority card information according to the embodiment of the present invention is not limited to such, and the information may be recorded in a DB format, for example. Further, in FIG. 12, one priority card information 358 is stored in the storage section 304. However, it is not limited to such, and the storage section 304 may store a plurality of priority card information, for example.

The card selection section 328 selects virtual card information corresponding to a non-contact type IC card to be used for communication with the reader/writer 21 from the virtual card information stored in the storage section 304 by using the virtual card information stored in the storage section 304. Here, the card selection section 328 may perform the card selection process when, for example, a communication request (request command, for example) relating to a predetermined service is received from the transmitting/receiving circuit 308 (for example, at the moment of starting the transaction of the reader/writer 21 and the electronic wallet device 30). Incidentally, when there is only one non-contact type IC card 1 held in the holding section 102, that is, when there is only one virtual card information stored in the storage section 304, the card selection section 328 may select the virtual card information in advance.

Further, the card selection section 328 may select virtual card information by the same standards as the card selection section 130 according to the first embodiment. That is, the card selection section 328 may select virtual card information to be used for communication with the reader/writer 21 by the following procedures, for example.

### (c) Selection using Virtual Card Information

The card selection section 328 selects virtual card information dealing with a communication request relating to a predetermined service by matching code (system code, service code indicating the service provided by the host device 20, for example) included in the communication request relating to a predetermined service transmitted from the reader/writer 21 and code included in the virtual card information.

### (d) Selection based on Other Selection Standards

The card selection section 328 selects virtual card information from the virtual card information selected in the above described (c) by sequentially applying other selection standards. Here, the other selection standard according to the second embodiment of the present invention may be selection based on priority information, selection based on non-used card information, selection based on priority card information, or selection based on position calculation data. However, it is not limited to such.

The card selection section 328 may select virtual card information to be used for communication with the reader/writer 21 based on the above (c) or the above (c) and (d), for example.

The data processing section 330 performs data processing relating to a predetermined service by using virtual card information selected by the card selection section 328, a communication request, various processing requests and data transmitted from the reader/writer 21 that are demodulated by the transmitting/receiving section 308. Here, the data processing performed by the data processing section 330 may be subtraction of electronic money value data (service data) in a purchasing service or authentication process in an authentication service when entering a building. However, it is not limited to such. Further, the data processing section 330 may, in accordance with the result of the data processing, update service data of the selected virtual card information, for example.

The data processing section 330 may transmit a response signal in accordance with the result of the data processing to the transmitting/receiving circuit 308. Here, the data processing section 330 may transmit the response signal in accordance with the result of the data processing by, for example, transmitting a control signal that controls load modulation to the load modulation circuit of the transmitting/receiving circuit 308. However, it is not limited to such.

The electronic wallet device 30 may select virtual card information as above, and may communicate with the reader/writer 21 (or the host device 20) by using the selected virtual card information.

The virtual card information write back section 332 writes back, in response to card ejection request, virtual card information requested for ejection, stored in the storage section 304, into a corresponding non-contact type IC card held in the holding section 102 via the selector 306 and the antenna for card communication 109. Here, the card ejection request is performed by, for example, a user performing, using the operation section 103, an eject operation on a non-contact type IC card whose ejection is desired. However, it is not limited to such. Further, the virtual card information write back section 332 may perform write back process when a non-contact type IC card 1 is being removed from the electronic wallet device 30, for example. However, it is not limited to such, and the virtual card information write back section 332 may perform the write back process periodically or when communication with the reader/writer is not being performed, for example.

### (Method for Writing Back Virtual Card Information)

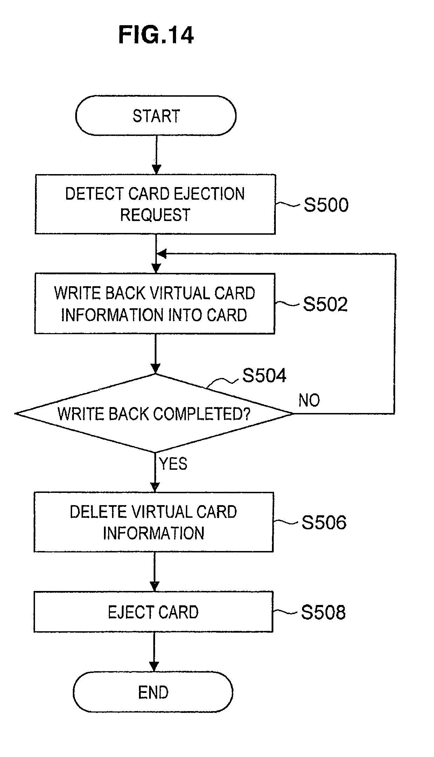

FIG. 14 is a flow chart showing an example of a method for writing back virtual card information according to the second embodiment of the present invention. FIG. 14 shows as an example of the write back method, a method for a case where the electronic wallet device 30 ejects a non-contact type IC card.

The electronic wallet device 30 detects a card ejection request (step S500). When the card ejection request is detected in step S500, the electronic wallet device 30 writes back virtual card information requested for ejection into the non-contact type IC card (step S502).

When the write back process is performed in step S502, the electronic wallet device 30 determines whether the write back process is completed or not (step S504).

When it is not determined that the write back process is completed in step S504, the electronic wallet device 30 repeats the processings from step S502.

Further, when it is determined that the write back process is completed in step S504, the electronic wallet device 30 deletes the virtual card information requested for ejection from the storage section 304 (step S506).

When the virtual card information requested for ejection is deleted from the storage section 304 in step S506, the electronic wallet device 30 ejects the non-contact type IC card requested for ejection (step S508).

The electronic wallet device 30 may write back virtual card information into the corresponding non-contact type IC card by using the method as shown FIG. 14, for example. Further, the electronic wallet device 30 using the method as shown FIG. 14 ejects non-contact type IC card requested for ejection from the holding section 102 after deleting the virtual card information from the storage section 304, as shown in steps S506 and S508, that data can be prevented from existing redundantly in both the non-contact type IC card and the electronic wallet device 30 after ejection of the non-contact type IC card.

As described above, the electronic wallet device 30 according to the second embodiment of the present invention, in response to the attaching (mounting) of a non-contact type IC card 1, reads out internal information from the non-contact type IC card 1 inserted into the holding section 102 and records the information in the storage section 304 as virtual card information. Further, the electronic wallet device 30 automatically selects one virtual card information to be used for communication with the reader/writer 21 by using codes included in both virtual card information (or virtual card information and other standards) and communication request, that is transmitted fro the reader/writer21, relating to a predetermined service, for example. Then, the electronic wallet device 30 performs various processings relating to a predetermined service by using the selected virtual card information. Further, the electronic wallet device 30 may transmit to the reader/writer 21 response signals corresponding to the results of various processings. As described above, the electronic wallet device 30 may select one virtual card information from virtual card information corresponding to the respective non-contact type IC cards 1 held in the holding section 102, and may communicate with the reader/writer 21 (or the host device 20) by using the selected virtual card information. Accordingly, the electronic wallet device 30 may make the non-contact type IC card 1 corresponding to the selected virtual card information and the reader/writer 21 virtually communicate with each other.

Further, since the electronic wallet device 30 may make the non-contact type IC card 1 corresponding to the selected virtual card information and the reader/writer 21 virtually communicate with each other, even when a plurality of non-contact type IC cards 1 that are of similar type and that are not prepared for anti-collision are held in the electronic wallet device 30, it can be prevented for the plurality of the non-contact type IC cards 1 to respond simultaneously to the communication request from the reader/writer 21.

Further, the electronic wallet device 30 may set, by a user input, for example, virtual card information not to be used or virtual card information to be preferentially used. The electronic wallet device 30 may automatically select one virtual card information to be used for communication with the reader/writer 21 based on the setting by the user input, it is possible to realize a variety of services by using virtual card information corresponding to the non-contact type IC card a user desires to use.

### (Program according to Second Embodiment)

With a program for making a computer function as the electronic wallet device 30 according to the second embodiment, it is made possible to select virtual card information corresponding to a desired non-contact type IC card from virtual card information corresponding to a plurality of non-contact type IC cards carried together, regardless of whether the non-contact type IC cards are prepared for anti-collision or not. Further, with a program for making a computer function as the electronic wallet device 30 according to the second embodiment, it is made possible to make the non-contact type IC card corresponding to the selected virtual card information and the external unit virtually communicate with each other.

### (Communication Method according to Second Embodiment)

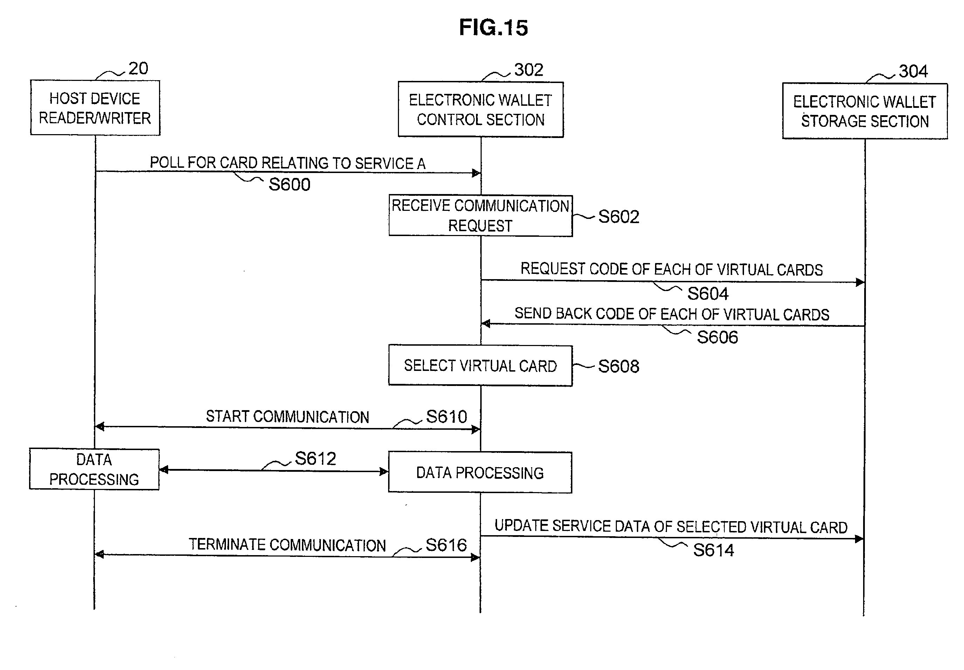

Next, a communication method of the electronic wallet device 30 according to the second embodiment will be described. FIG. 15 is a sequence diagram showing an example of a communication method of the electronic wallet device according to the second embodiment of the present invention. FIG. 15 shows an example of communication between the reader/writer 21 of the host device 20 dealing with a service A and the electronic wallet device 30.

The reader/writer 21 of the host device 20 performs polling for a non-contact type IC card 1 relating to the service A (step S600), similarly to step S200 of FIG. 9 according to the communication method according to the first embodiment.

When a user holds the electronic wallet device 30 over the reader/writer 21 during polling by the reader/writer 21, the control section 302 of the electronic wallet device 30 receives the communication request sent out from the reader/writer 21 (step S602), similarly to step S202 of FIG. 9 according to the communication method according to the first embodiment.

When the communication request is received in step S602, the control section 302 requests the storage section 304 of the electronic wallet device 30 for code of each of virtual card information stored in the storage section 304 (step S604). Here, by using the method as shown in FIG. 13, for example, the virtual card information corresponding to the respective non-contact type IC cards 1 held in the holding section 102 is stored in the storage section 304.

When a code obtaining request for each of the virtual card information is made in step S604, the storage section 304 sends back the code of each of the virtual card information in response to the request (step S606). Here, the sending back of codes in step S606 may be realized by the control section 302 making the storage section 304 read out the code, for example, but it is not limited to such.

In step S606, when the code of each of the virtual card information stored in the storage section 304 is sent back, the control section 302 selects virtual card information to be used for communication with the reader/writer 21 by using the obtained code of each of the virtual card information (step S608).

The selection process in step S608 may be performed by matching respectively the obtained code of each of the virtual card information with code included in the communication request relating to a predetermined service transmitted from the reader/writer 21, similarly to step S208 of FIG. 9 according to the communication method according to the first embodiment, for example, but it is not limited to such.

Incidentally, in addition to the matching process described above, the control section 302 may perform selection by other selection standard, similarly to the control section 105 of the electronic wallet device 10 according to the first embodiment. Here, selection by other standard may be selection based on information of the set priority, selection based on the non-used card information, selection based on the priority card information, or selection based on position calculation data, as described above. However, it is not limited to such. By selecting virtual card information to be used for communication with the reader/writer 21 by using a plurality of selection standards, the control section 302 may select virtual card information to be used for communication more flexibly.

When virtual card information is selected in step S608, communication relating to a predetermined service is initiated between the reader/writer 21 and the control section 302 (step S610), and various data processings are performed (step S612). Here, since a processing performed in step S612 is performed by using the virtual card information, it may be seen as a data processing performed between the non-contact type IC card 1 corresponding to the virtual card information and the reader/writer 21.

Based on the result of the data processing in step S612, the control section 302 updates service data of the selected virtual card information (step S614). With the processing of step S614 performed, the virtual card information stored in storage section 304 reflects the result of the data processing in step S612. That is, with the processing of step S614, a predetermined service between the reader/writer 21 (service provider) and the electronic wallet device 30 (service receiver) may be established.

When all the data processings between the reader/writer 21 and the control section 302 relating to the predetermined service are completed, the communication between the reader/writer 21 and the control section 302 is terminated (step S616).

With the communication method as shown in FIG. 15, for example, the electronic wallet device 30 according to the second embodiment may select virtual card information corresponding to a desired non-contact type IC card from virtual card information corresponding to a plurality of the non-contact type IC cards carried together and may make the non-contact type IC card corresponding to the selected virtual card information virtually communicate with the external unit, regardless of whether the non-contact type IC cards are prepared for anti-collision or not.

It should be understood by those skilled in the art that various modifications, combinations, sub-combinations and alterations may occur depending on design requirements and other factors insofar as they are within the scope of the appended claims or the equivalents thereof.

For example, although an electronic wallet device to which a non-contact type IC card is attached/detached is described as the first and the second embodiments as described above, the embodiment of the present invention is not limited to such. For example, the electronic wallet device according to the embodiment of the present invention may be applied to a mobile communication device such as a cell phone that holds a plurality of IC chips in an attachable/detachable manner. Even in case where the electronic wallet device according to the embodiment of the present invention is applied to a mobile communication device such as a cell phone, for example, regardless of whether the IC chips are prepared for anti-collision or not, it is made possible to select a desired IC chip (or virtual card information corresponding to the IC chip) among a plurality of IC chips (or virtual card information corresponding to the IC chips) carried together and make the selected IC chip (or IC chip corresponding to the virtual card information) and the external unit communicate directly or virtually with each other.

The configuration as described above is an example of the embodiment of the present invention, and naturally, it is within the technical scope of the present invention.

## Claims

1. An electronic wallet device, comprising:
a holding section holding, in an attachable/detachable manner, a plurality of non-contact type IC cards capable of non-contact communication with an external unit;
an antenna for external communication communicating contactlessly with the external unit;
a transmitting/receiving section demodulating a communication request relating to a predetermined service transmitted from the external unit and received by the antenna for external communication, and transmitting a response signal to the external unit via the antenna for external communication;
a storage section storing internal information of the respective non-contact type IC cards held in the holding section as virtual card information;
a card internal information recording section recording in the storage section, based on the status of mounting of the non-contact type IC card in the holding section, the virtual card information corresponding to the non-contact type IC card mounted in the holding section;
a card selection section selecting virtual card information to be used for communication with the external unit based on code included in the communication request and the virtual card information stored in the storage section when the communication request is received via the antenna for external communication; and
a data processing section performing processing requested by the communication request by using the virtual card information selected in the card selection section, and making the transmitting/receiving section transmit a response signal corresponding to the processing result.

2. The electronic wallet device according to claim 1, further comprising:
a card recognition section detecting the non-contact type IC card mounted in the holding section, wherein
the card internal information recording section records the virtual card information corresponding to the detected non-contact type IC card in the recording section each time a non-contact type IC card mounted is detected by the card recognition section.

3. The electronic wallet device according to claim 1, further comprising:
a virtual card information write back section writing back the virtual card information stored in the storage section into the non-contact type IC card corresponding to the virtual card information.

4. The electronic wallet device according to claim 3, wherein
the virtual card information write back section deletes the virtual card information corresponding to the non-contact type IC card stored in the storage section when the writing back of the virtual card information into the non-contact type IC card is completed.

5. The electronic wallet device according to claim 3, wherein
the holding section makes possible ejection of the non-contact type IC card into which the virtual card information is written back, when the writing back of the virtual card information into the non-contact type IC card is completed in the virtual card information write back section.

6. An electronic wallet device, comprising:
a holding section holding, in an attachable/detachable manner, a plurality of non-contact type IC cards capable of non-contact communication with an external unit;
an antenna for external communication communicating contactlessly with the external unit;
an antenna for card communication communicating contactlessly with the plurality of the non-contact type IC cards held in the holding section;
a storage section capable of storing code relating to service the respective non-contact type IC cards held in the holding section relate to;
a card internal information recording section recording, in accordance with the attaching/detaching of the non-contact type IC cards in the holding section, the code of the respective non-contact type IC cards held in the holding section;
a card selection section selecting a non-contact type IC card to be used for communication with the external unit based on the code included in the communication request and the code stored in the storage section when a communication request relating to a predetermined service transmitted from the external unit is received via the antenna for external communication; and
a communication control section connecting the non-contact type IC card selected by the card selection section and the external unit in a communicable manner via the antenna for external communication and the antenna for card communication.

7. The electronic wallet device according to claim 6, further comprising:
a card recognition section detecting the attaching/detaching of the non-contact type IC card in the holding section, wherein
the card internal information recording section updates the code of the non-contact type IC cards stored in the storage section to the code of the respective non-contact type IC cards held in the holding section each time the attaching/detaching of the non-contact type IC card is detected by the card recognition section.

8. A communication method for an electronic wallet device including a holding section capable of holding a plurality of non-contact type IC cards capable of non-contact communication with an external unit, an antenna for external communication communicating contactlessly with the external unit, and a storage section, comprising:
detecting step of detecting the non-contact type IC card mounted in the holding section;
recording step of recording in the storage section, when the non-contact type IC card mounted is detected in the detecting step, internal information of the detected non-contact type IC card as virtual card information;
selecting step of selecting the virtual card information corresponding to communication request from the virtual card information stored in the storage section when the communication request relating to a predetermined service is received from the external unit via the antenna for external communication;
processing step of processing the communication request by using the virtual card information selected in the selecting step; and
transmitting step of transmitting a response signal corresponding to the processing result by the processing step via the antenna for external communication.

9. A communication method for an electronic wallet device including a holding section capable of holding a plurality of non-contact type IC cards capable of non-contact communication with an external unit, an antenna for external communication communicating contactlesly with the external unit, and a storage section, comprising:
detecting step of detecting the attaching/detaching of the non-contact type IC card in the holding section;
recording step of recording in the storage section code relating to service the respective non-contact type IC cards held in the holding section relate to when the attaching/detaching of the non-contact type IC card is detected by the detecting step;
selecting step of selecting a non-contact type IC card corresponding to communication request among the non-contact type IC cards held in the holding section based on the code recorded in the storage section when the communication request relating to a predetermined service is received from the external unit via the antenna for external communication; and
connecting step of connecting the non-contact type IC card selected in the selecting step and the external unit in a communicable manner.

10. A program that can be used in an electronic wallet device including a holding section capable of holding a plurality of non-contact type IC cards capable of non-contact communication with an external unit, an antenna for external communication communicating contactlessly with the external unit, and a storage section, wherein the program makes a computer execute:
detecting step of detecting the non-contact type IC card mounted in the holding section;
recording step of recording in the storage section, when the non-contact type IC card mounted is detected in the detecting step, internal information of the detected non-contact type IC card recorded as virtual card information;
selecting step of selecting the virtual card information corresponding to communication request from the virtual card information stored in the storage section when the communication request relating to a predetermined service is received from the external unit via the antenna for external communication;
processing step of processing the communication request by using the virtual card information selected in the selecting step; and
transmitting step of transmitting a response signal corresponding to the processing result by the processing step via the antenna for external communication.

11. A program that can be used in an electronic wallet device including a holding section capable of holding a plurality of non-contact type IC cards capable of non-contact communication with an external unit, an antenna for external communication communicating contactlessly with the external unit, and a storage section, wherein the program makes a computer execute:
detecting step of detecting the attaching/detaching of the non-contact type IC card in the holding section;
recording step of recording in the storage section code relating to service the respective non-contact type IC cards held in the holding section relate to when the attaching/detaching of the non-contact type IC card is detected by the detecting step;
selecting step of selecting a non-contact type IC card corresponding to communication request from the non-contact type IC cards held in the holding section based on the code recorded in the storage section when the communication request relating to a predetermined service is received from the external unit via the antenna for external communication; and
connecting step of connecting the non-contact type IC card selected in the selecting step and the external unit in a communicable manner.
